(19) Europäisches Patentamt
European Patent Office
Office européen des brevets

(11) **EP 4 716 167 A1**

(12) **EUROPEAN PATENT APPLICATION**
published in accordance with Art. 153(4) EPC

(43) Date of publication:
**25.03.2026 Bulletin 2026/13**

(21) Application number: **24822546.8**

(22) Date of filing: **29.05.2024**

(51) International Patent Classification (IPC):
***H04L 27/26*** (2006.01)   ***H04W 72/0453*** (2023.01)
***H04W 72/50*** (2023.01)

(52) Cooperative Patent Classification (CPC):
**H04L 27/26; H04W 72/0453; H04W 72/50**

(86) International application number:
**PCT/CN2024/096018**

(87) International publication number:
**WO 2024/255594 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.06.2023   CN 202310696390**

(71) Applicant: **Huawei Technologies Co., Ltd.
Shenzhen, Guangdong 518129 (CN)**

(72) Inventors:
• **GONG, Bo
Shenzhen, Guangdong 518129 (CN)**
• **GAN, Ming
Shenzhen, Guangdong 518129 (CN)**
• **HU, Mengshi
Shenzhen, Guangdong 518129 (CN)**
• **LI, Yunbo
Shenzhen, Guangdong 518129 (CN)**

(74) Representative: **Isarpatent
Patent- und Rechtsanwälte PartG mbB
Friedrichstraße 31
80801 München (DE)**

(54) **COMMUNICATION METHOD AND COMMUNICATION APPARATUS**

(57) Embodiments of this application provide a communication method. The method is applied to a wireless local area network system supporting 802.11 series protocols, for example, a next-generation Wi-Fi protocol of IEEE 802.11ax, like 802.11be, Wi-Fi 7, or EHT, or for another example, a next-generation of 802.11be, like Wi-Fi 8, UHR, or Wi-Fi AI, and may be further applied to an ultra-wideband UWB-based wireless personal area network system or a sensing (sensing) system. The method includes: inputting high-frequency constellation mapping symbols into a tone mapper; and recording, by the tone mapper, the high-frequency constellation mapping symbols. For communication transmission in a high frequency band scenario, a proper tone mapper may be designed, and constellation mapping symbols are reordered based on the tone mapper.

S910

Input high-frequency constellation mapping symbols into a tone mapper

S920

Reorder the high-frequency constellation mapping symbols

FIG. 9

EP 4 716 167 A1

**Description**

This application claims priority to Chinese Patent Application No. 202310696390.X, filed with the China National Intellectual Property Administration on June 12, 2023 and entitled "COMMUNICATION METHOD AND COMMUNICATION APPARATUS", which is incorporated herein by reference in its entirety.

**TECHNICAL FIELD**

Embodiments of this application relate to the field of communication technologies, and more specifically, to a communication method and a communication apparatus.

**BACKGROUND**

Development of a wireless local area network (wireless local area network, WLAN) makes wireless communication increasingly popular. A standard formulated by the Institute of Electrical and Electronics Engineers (Institute of Electrical and Electronics Engineers, IEEE) for the WLAN also continuously evolves, and has evolved from a protocol standard supporting low frequency band communication to a protocol standard supporting high frequency band communication. For example, protocol standards for low frequency bands include 802.11a/g, 802.11n, 802.11ac, 802.11ax, and 802.11be, and supported frequency bands include one or more of 2.4 GHz/5 GHz/6 GHz; and protocol standards for high frequency bands include 802.11aj/ay, and supported frequency bands include one or more of 45 GHz/60 GHz.

Currently, a considered manner of sending a high frequency band physical layer signal is: obtaining the high frequency band physical layer signal by increasing a carrier spacing (that is, a bandwidth) of a physical layer signal of a low frequency band (for example, the 802.11a/g, 802.11n, 802.11ac, 802.11 ax, and 802.11be protocols) by an integer multiple, to ensure that digital signal processing processes of a high frequency band signal and a low frequency band signal are nearly consistent. However, because interference and noise of a high frequency band are different from those of a low frequency band, a tone mapper corresponding to the low frequency band signal is no longer applicable to a high frequency band scenario, and a proper tone mapper needs to be redesigned for communication transmission in the high frequency band scenario.

**SUMMARY**

Embodiments of this application provide a communication method, to design a proper tone mapper for communication transmission in a high frequency band scenario.

According to a first aspect, a communication method is provided, including: inputting high-frequency constellation mapping symbols into a tone mapper; and the tone mapper reorders the high-frequency constellation mapping symbols.

Based on the foregoing technical solution, for communication transmission in a high frequency band scenario, a proper tone mapper may be designed, and constellation mapping symbols are reordered based on the tone mapper.

With reference to the first aspect, in some implementations of the first aspect, the high-frequency constellation mapping symbols are used for single-user transmission.

With reference to the first aspect, in some implementations of the first aspect, a quantity of data tones of the tone mapper is $N_{SD}$; and

if a total quantity of tones is 64, $N_{SD}$ is less than 52, and a tone mapping distance parameter $D_{TM}$ of the tone mapper is 3 or 4; or
if a total quantity of tones is 128, $N_{SD}$ is less than 108, and a tone mapping distance parameter $D_{TM}$ of the tone mapper is 5 or 7; or
if a total quantity of tones is 256, $N_{SD}$ is less than 234, and a tone mapping distance parameter $D_{TM}$ of the tone mapper is 2 or 8.

With reference to the first aspect, in some implementations of the first aspect, if the total quantity of tones is 64,

$N_{SD}$ is 44, and the tone mapping distance parameter $D_{TM}$ of the tone mapper is 4; or
$N_{SD}$ is 42, and the tone mapping distance parameter $D_{TM}$ of the tone mapper is 3; or
$N_{SD}$ is 42, and the tone mapping distance parameter $D_{TM}$ of the tone mapper is 3; or
$N_{SD}$ is 40, and the tone mapping distance parameter $D_{TM}$ of the tone mapper is 4.

With reference to the first aspect, in some implementations of the first aspect, if the total quantity of tones is 128,

$N_{SD}$ is 100, and the tone mapping distance parameter $D_{TM}$ of the tone mapper is 5; or
$N_{SD}$ is 98, and the tone mapping distance parameter $D_{TM}$ of the tone mapper is 7.

With reference to the first aspect, in some implementations of the first aspect, if the total quantity of tones is 256,

$N_{SD}$ is 226, and the tone mapping distance parameter $D_{TM}$ of the tone mapper is 2; or
$N_{SD}$ is 224, and the tone mapping distance parameter $D_{TM}$ of the tone mapper is 8.

With reference to the first aspect, in some implementations of the first aspect, the tone mapper includes at least one tone mapper, and the at least one tone mapper is at least one tone mapper in a preset tone mapper set.
Based on the foregoing technical solution, in the high frequency band communication scenario, the tone mapper may be determined by the at least one tone mapper in the preset tone mapper set, and no separate design is required. This simplifies implementation.
With reference to the first aspect, in some implementations of the first aspect, the tone mapper includes a first tone mapper, a quantity of data tones of the first tone mapper is M, a total quantity of data tones is N, N is greater than M, and N and M are positive integers; and
high-frequency constellation mapping symbols carried on the M data tones of the N data tones are reordered based on the first tone mapper, and high-frequency constellation mapping symbols carried on remaining N-M data tones of the N data tones are not reordered.
With reference to the first aspect, in some implementations of the first aspect, if a total quantity of tones is 64, a value of the total quantity N of data tones includes 46, 44, or 42;

a tone mapping distance parameter $D_{TM}$ of the first tone mapper is 3, and the quantity of data tones of the first tone mapper is 36;
the first tone mapper is a tone mapper, applicable to a first multi-resource unit using a dual-carrier modulation mode, in the tone mapper set, the first multi-resource unit includes a first resource unit and a second resource unit, the first resource unit includes 26 tones, and the second resource unit includes 52 tones; and
high-frequency constellation mapping symbols carried on the 36 data tones of the N data tones are reordered based on the first tone mapper, and high-frequency constellation mapping symbols carried on N-36 data tones of the N data tones are not reordered.

With reference to the first aspect, in some implementations of the first aspect, the tone mapper includes a first tone mapper, a quantity of data tones of the first tone mapper is M, a total quantity of data tones is N, N is greater than M, and N and M are positive integers; and
high-frequency constellation mapping symbols carried on the M data tones of the N data tones are reordered based on the first tone mapper, to obtain reordered N data tones, and high-frequency constellation mapping symbols carried on M data tones of the reordered N data tones are reordered based on the first tone mapper.
With reference to the first aspect, in some implementations of the first aspect, if a total quantity of tones is 64, a value of N includes 46, 44, or 42;

a tone mapping distance parameter $D_{TM}$ of the first tone mapper is 3, and the quantity of data tones of the first tone mapper is 36;
the first tone mapper is a tone mapper, applicable to a first multi-resource unit using a dual-carrier modulation mode, in the tone mapper set, the first multi-resource unit includes a first resource unit and a second resource unit, the first resource unit includes 26 tones, and the second resource unit includes 52 tones; and
high-frequency constellation mapping symbols carried on the 36 data tones of the N data tones are reordered based on the first tone mapper, to obtain reordered N data tones, and high-frequency constellation mapping symbols carried on 36 data tones of the reordered N data tones are reordered based on the first tone mapper.

With reference to the first aspect, in some implementations of the first aspect, the tone mapper includes a plurality of tone mappers, and a sum of quantities of data tones of the plurality of tone mappers is equal to a total quantity of data tones; and
the total quantity of data tones is divided into a plurality of parts, high-frequency constellation mapping symbols carried on the plurality of parts are separately reordered based on the plurality of tone mappers, and the plurality of parts are in a one-to-one correspondence with the plurality of tone mappers.
With reference to the first aspect, in some implementations of the first aspect, if a total quantity of tones is 128, N is 100, the tone mapper includes a second tone mapper and a third tone mapper, a tone mapping distance parameter $D_{TM}$ of the second tone mapper is 3, a quantity of data tones of the second tone mapper is 48, a tone mapping distance parameter

$D_{TM}$ of the third tone mapper is 4, and a quantity of data tones of the third tone mapper is 52;

the second tone mapper is a tone mapper applicable to a second resource unit in the tone mapper set, the second resource unit includes 52 tones, the third tone mapper is a tone mapper applicable to a 20 M bandwidth signal in the tone mapper set, and a tone spacing corresponding to the 20 M bandwidth signal is 312.5 kHz; and
high-frequency constellation mapping symbols carried on the 48 data tones of the 100 data tones are reordered based on the second tone mapper, and high-frequency constellation mapping symbols carried on the remaining 52 data tones of the 100 data tones are reordered based on the third tone mapper.

With reference to the first aspect, in some implementations of the first aspect, if a total quantity of tones is 256, N is 228, the tone mapper includes a fourth tone mapper and a fifth tone mapper, a tone mapping distance parameter $D_{TM}$ of the fourth tone mapper is 6, a quantity of data tones of the fourth tone mapper is 126, a tone mapping distance parameter $D_{TM}$ of the fifth tone mapper is 6, and a quantity of data tones of the fifth tone mapper is 102;

the fourth tone mapper is a tone mapper applicable to a second multi-resource unit in the tone mapper set, the second multi-resource unit includes a third resource unit and a first resource unit, the first resource unit includes 26 tones, the third resource unit includes 106 tones, and the fifth tone mapper is a tone mapper applicable to the third resource unit in the tone mapper set; and
high-frequency constellation mapping symbols carried on the 126 data tones of the 228 data tones are reordered based on the fourth tone mapper, and high-frequency constellation mapping symbols carried on the remaining 102 data tones of the 228 data tones are reordered based on the fifth tone mapper.

With reference to the first aspect, in some implementations of the first aspect, if the total quantity of tones is 256, N is 226, the tone mapper includes a fourth tone mapper, a second tone mapper, and a third tone mapper, a tone mapping distance parameter $D_{TM}$ of the fourth tone mapper is 6, a quantity of data tones of the fourth tone mapper is 126, a tone mapping distance parameter $D_{TM}$ of the second tone mapper is 3, a quantity of data tones of the second tone mapper is 48, a tone mapping distance parameter $D_{TM}$ of the third tone mapper is 4, and a quantity of data tones of the third tone mapper is 52;

the fourth tone mapper is a tone mapper applicable to a second multi-resource unit in the tone mapper set, the second multi-resource unit includes a third resource unit and a first resource unit, the first resource unit includes 26 tones, the third resource unit includes 106 tones, the second tone mapper is a tone mapper applicable to the second resource unit in the tone mapper set, the second resource unit includes 52 tones, the third tone mapper is a tone mapper applicable to a 20 M bandwidth signal in the tone mapper set, and a tone spacing corresponding to the 20 M bandwidth signal is 312.5 kHz; and
high-frequency constellation mapping symbols carried on the 126 data tones (for example, the first 126 data tones) of the 226 data tones are reordered based on the fourth tone mapper, high-frequency constellation mapping symbols carried on the 48 data tones (for example, the 127th to 174th data tones) of data tones other than the 126 data tones of the 226 data tones are reordered based on the second tone mapper, and high-frequency constellation mapping symbols carried on the remaining 52 data tones (for example, the 175th to 226th data tones) of the 226 data tones are reordered based on the third tone mapper.

With reference to the first aspect, in some implementations of the first aspect, if the total quantity of tones is 512, N is 474;

the tone mapper includes a sixth tone mapper, a seventh tone mapper, and an eighth tone mapper, a tone mapping distance parameter $D_{TM}$ of the sixth tone mapper is 9, a quantity of data tones of the sixth tone mapper is 351, a tone mapping distance parameter $D_{TM}$ of the seventh tone mapper is 4, a quantity of data tones of the seventh tone mapper is 72, a tone mapping distance parameter $D_{TM}$ of the eighth tone mapper is 3, and a quantity of data tones of the eighth tone mapper is 51;
the sixth tone mapper is a tone mapper, applicable to a third multi-resource unit using a dual-carrier modulation mode, in the tone mapper set, the third multi-resource unit includes a fourth resource unit and a fifth resource unit, the fourth resource unit includes 484 tones, the fifth resource unit include 242 tones, the seventh tone mapper is a tone mapper applicable to a first multi-resource unit in the tone mapper set, the first multi-resource unit includes a first resource unit and a second resource unit, the first resource unit includes 26 tones, the second resource unit includes 52 tones, the eighth tone mapper is a tone mapper applicable to a third resource unit in the tone mapper set, and the third resource unit includes 106 tones; and
high-frequency constellation mapping symbols carried on the 351 data tones of the 474 data tones are reordered based on the sixth tone mapper, high-frequency constellation mapping symbols carried on the 72 data tones of data tones other than the 351 data tones of the 474 data tones are reordered based on the seventh tone mapper, and high-frequency constellation mapping symbols carried on the remaining 51 data tones of the 474 data tones are reordered based on the eighth tone mapper.

According to a second aspect, a communication method is provided, including: inputting reordered high-frequency constellation mapping symbols into a tone inverse-mapper; and the tone inverse-mapper performs sequence restoration on the reordered high-frequency constellation mapping symbols.

Based on the foregoing technical solution, for communication transmission in a high frequency band scenario, a proper tone inverse-mapper may be designed, and reordered high-frequency constellation mapping symbols are reordered based on the tone inverse-mapper.

With reference to the second aspect, in some implementations of the second aspect, the reordered high-frequency constellation mapping symbols are used for single-user transmission.

With reference to the second aspect, in some implementations of the second aspect, the tone inverse-mapper includes a first tone inverse-mapper, and a quantity of data tones of the first tone inverse-mapper is $N'_{SD}$; and

if a total quantity of tones is 64, $N'_{SD}$ is less than 52, and a tone mapping distance parameter $D'_{TM}$ of the first tone inverse-mapper is 3 or 4; or
if a total quantity of tones is 128, $N'_{SD}$ is less than 108, and a tone mapping distance parameter $D'_{TM}$ of the first tone inverse-mapper is 5 or 7; or
if a total quantity of tones is 256, $N'_{SD}$ is less than 234, and a tone mapping distance parameter $D'_{TM}$ of the first tone inverse-mapper is 2 or 8.

With reference to the second aspect, in some implementations of the second aspect, if the total quantity of tones is 64,

$N'_{SD}$ is 44, and the tone mapping distance parameter $D'_{TM}$ of the first tone inverse-mapper is 4; or
$N'_{SD}$ is 42, and the tone mapping distance parameter $D'_{TM}$ of the first tone inverse-mapper is 3; or
$N'_{SD}$ is 42, and the tone mapping distance parameter $D'_{TM}$ of the first tone inverse-mapper is 3; or
$N'_{SD}$ is 40, and the tone mapping distance parameter $D'_{TM}$ of the first tone inverse-mapper is 4.

With reference to the second aspect, in some implementations of the second aspect, if the total quantity of tones is 128,

$N'_{SD}$ is 100, and the tone mapping distance parameter $D'_{TM}$ of the first tone inverse-mapper is 5; or
$N'_{SD}$ is 98, and the tone mapping distance parameter $D'_{TM}$ of the first tone inverse-mapper is 7.

With reference to the second aspect, in some implementations of the second aspect, if the total quantity of tones is 256,

$N'_{SD}$ is 226, and the tone mapping distance parameter $D'_{TM}$ of the first tone inverse-mapper is 2; or
$N'_{SD}$ is 224, and the tone mapping distance parameter $D'_{TM}$ of the first tone inverse-mapper is 8.

With reference to the second aspect, in some implementations of the second aspect, the tone inverse-mapper includes at least one tone inverse-mapper, and the at least one tone inverse-mapper is at least one tone inverse-mapper in a preset tone inverse-mapper set.

Based on the foregoing technical solution, in the high frequency band communication scenario, the tone inverse-mapper may be determined by the at least one tone inverse-mapper in the preset tone inverse-mapper set, and no separate design is required. This simplifies implementation.

With reference to the second aspect, in some implementations of the second aspect, the tone inverse-mapper includes a first tone inverse-mapper, a quantity of data tones of the first tone inverse-mapper is M, a total quantity of data tones is N, N is greater than M, and N and M are positive integers; and

sequence restoration is performed, based on the first tone inverse-mapper, on reordered high-frequency constellation mapping symbols carried on the M data tones of the N data tones, and sequence restoration is not performed on reordered high-frequency constellation mapping symbols carried on remaining N-M data tones of the N data tones.

With reference to the second aspect, in some implementations of the second aspect, if a total quantity of tones is 64, a value of the total quantity N of data tones includes 46, 44, or 42;

a tone mapping distance parameter $D'_{TM}$ of the first tone inverse-mapper is 3, and the quantity of data tones of the first tone inverse-mapper is 36;

the first tone inverse-mapper is a tone inverse-mapper, applicable to a first multi-resource unit using a dual-carrier modulation mode, in the tone inverse-mapper set, the first multi-resource unit includes a first resource unit and a second resource unit, the first resource unit includes 26 tones, and the second resource unit includes 52 tones; and sequence restoration is performed, based on the first tone inverse-mapper, on reordered high-frequency constellation mapping symbols carried on the 36 data tones of the N data tones, and sequence restoration is not performed on reordered high-frequency constellation mapping symbols carried on remaining N-36 data tones of the N data tones.

With reference to the second aspect, in some implementations of the second aspect, the tone inverse-mapper includes a first tone inverse-mapper, a quantity of data tones of the first tone inverse-mapper is M, a total quantity of data tones is N, N is greater than M, and N and M are positive integers; and

sequence restoration is performed, based on the first tone inverse-mapper, on reordered high-frequency constellation mapping symbols carried on the M data tones of the N data tones, to obtain reordered N data tones, and sequence restoration is performed, based on the first tone inverse-mapper, on reordered high-frequency constellation mapping symbols carried on M data tones of the reordered N data tones.

With reference to the second aspect, in some implementations of the second aspect, if a total quantity of tones is 64, a value of N includes 46, 44, or 42;

a tone mapping distance parameter $D'_{TM}$ of the first tone inverse-mapper is 3, and the quantity of data tones of the first tone inverse-mapper is 36;

the first tone inverse-mapper is a tone inverse-mapper, applicable to a first multi-resource unit using a dual-carrier modulation mode, in the tone inverse-mapper set, the first multi-resource unit includes a first resource unit and a second resource unit, the first resource unit includes 26 tones, and the second resource unit includes 52 tones; and sequence restoration is performed, based on the first tone inverse-mapper, on reordered high-frequency constellation mapping symbols carried on the 36 data tones of the N data tones, to obtain reordered N data tones, and sequence restoration is performed, based on the first tone inverse-mapper, on reordered high-frequency constellation mapping symbols carried on 36 data tones of the reordered N data tones.

With reference to the second aspect, in some implementations of the second aspect, the tone inverse-mapper includes a plurality of tone inverse-mappers, and a sum of quantities of data tones of the plurality of tone inverse-mappers is equal to the total quantity of data tones; and

the total quantity of data tones is divided into a plurality of parts, sequence restoration is performed, respectively based on the plurality of tone inverse-mappers, on reordered high-frequency constellation mapping symbols carried on the plurality of parts, and the plurality of parts are in a one-to-one correspondence with the plurality of tone inverse-mappers.

With reference to the second aspect, in some implementations of the second aspect, if a total quantity of tones is 128, N is 100, the tone inverse-mapper includes a second tone inverse-mapper and a third tone inverse-mapper, a tone mapping distance parameter $D'_{TM}$ of the second tone inverse-mapper is 3, a quantity of data tones of the second tone inverse-mapper is 48, a tone mapping distance parameter $D'_{TM}$ of the third tone inverse-mapper is 4, and a quantity of data tones of the third tone inverse-mapper is 52;

the second tone inverse-mapper is a tone inverse-mapper applicable to a second resource unit in the tone inverse-mapper set, the second resource unit includes 52 tones, the third tone inverse-mapper is a tone inverse-mapper applicable to a 20 M bandwidth signal in the tone inverse-mapper set, and a tone spacing corresponding to the 20 M bandwidth signal is 312.5 kHz; and

sequence restoration is performed, based on the second tone inverse-mapper, on reordered high-frequency constellation mapping symbols carried on the 48 data tones of the 100 data tones, and sequence restoration is performed, based on the third tone inverse-mapper, on reordered high-frequency constellation mapping symbols carried on the remaining 52 data tones of the 100 data tones.

With reference to the second aspect, in some implementations of the second aspect, if a total quantity of tones is 256, N is 228, the tone inverse-mapper includes a fourth tone inverse-mapper and a fifth tone inverse-mapper, a tone mapping distance parameter $D'_{TM}$ of the fourth tone inverse-mapper is 6, a quantity of data tones of the fourth tone inverse-mapper is 126, a tone mapping distance parameter $D'_{TM}$ of the fifth tone inverse-mapper is 6, and a quantity of data tones of the fifth tone inverse-mapper is 102;

the fourth tone inverse-mapper is a tone inverse-mapper applicable to a second multi-resource unit in the tone inverse-mapper set, the second multi-resource unit includes a third resource unit and a first resource unit, the first resource unit includes 26 tones, the third resource unit includes 106 tones, and the fifth tone inverse-mapper is a tone inverse-mapper applicable to the third resource unit in the tone inverse-mapper set; and

sequence restoration is performed, based on the fourth tone inverse-mapper, on reordered high-frequency constellation mapping symbols carried on the 126 data tones of the 228 data tones, and sequence restoration is performed, based on the fifth tone inverse-mapper, on reordered high-frequency constellation mapping symbols carried on the remaining 102 data tones of the 228 data tones.

With reference to the second aspect, in some implementations of the second aspect, if a total quantity of tones is 256, N is 226, the tone inverse-mapper includes a fourth tone inverse-mapper, a second tone inverse-mapper, and a third tone inverse-mapper, a tone mapping distance parameter $D'_{TM}$ of the fourth tone inverse-mapper is 6, a quantity of data tones of the fourth tone inverse-mapper is 126, a tone mapping distance parameter $D'_{TM}$ of the second tone inverse-mapper is 3, a quantity of data tones of the second tone inverse-mapper is 48, a tone mapping distance parameter $D_{TM}$ of the third tone inverse-mapper is 4, and a quantity of data tones of the third tone inverse-mapper is 52;

the fourth tone inverse-mapper is a tone inverse-mapper applicable to a second multi-resource unit in the tone inverse-mapper set, the second multi-resource unit includes a third resource unit and a first resource unit, the first resource unit includes 26 tones, the third resource unit includes 106 tones, the second tone inverse-mapper is a tone inverse-mapper applicable to a second resource unit in the tone inverse-mapper set, the second resource unit includes 52 tones, the third tone inverse-mapper is a tone inverse-mapper applicable to a 20 M bandwidth signal in the tone inverse-mapper set, and a tone spacing corresponding to the 20 M bandwidth signal is 312.5 kHz; and
sequence restoration is performed, based on the fourth tone inverse-mapper, on reordered high-frequency constellation mapping symbols carried on the 126 data tones (for example, the first 126 data tones) of the 226 data tones, sequence restoration is performed, based on the second tone inverse-mapper, on reordered high-frequency constellation mapping symbols carried on the 48 data tones (for example, the $127^{th}$ to $174^{th}$ data tones) of data tones other than the 126 data tones of the 226 data tones, and sequence restoration is performed, based on the third tone inverse-mapper, on reordered high-frequency constellation mapping symbols carried on the remaining 52 data tones (for example, the $175^{th}$ to $226^{th}$ data tones) of the 226 data tones.

With reference to the second aspect, in some implementations of the second aspect, if a total quantity of tones is 512, N is 474;

the tone inverse-mapper includes a sixth tone inverse-mapper, a seventh tone inverse-mapper, and an eighth tone inverse-mapper, a tone mapping distance parameter $D'_{TM}$ of the sixth tone inverse-mapper is 9, a quantity of data tones of the sixth inverse-mapper is 351, a tone mapping distance parameter $D'_{TM}$ of the seventh tone inverse-mapper is 4, a quantity of data tones of the seventh tone inverse-mapper is 72, a tone mapping distance parameter $D'_{TM}$ of the eighth tone inverse-mapper is 3, and a quantity of data tones of the eighth tone inverse-mapper is 51;
the sixth tone inverse-mapper is a tone inverse-mapper applicable to a third multi-resource unit in the tone inverse-mapper set, the third multi-resource unit includes a fourth resource unit and a fifth resource unit, the fourth resource unit includes 484 tones, the fifth resource unit includes 242 tones, the seventh tone inverse-mapper is a tone inverse-mapper applicable to a first multi-resource unit in the tone inverse-mapper set, the first multi-resource unit includes a first resource unit and a second resource unit, the first resource unit includes 26 tones, the second resource unit includes 52 tones, the eighth tone inverse-mapper is a tone inverse-mapper applicable to a third resource unit in the tone inverse-mapper set, and the third resource unit includes 106 tones; and
sequence restoration is performed, based on the sixth tone inverse-mapper, on reordered high-frequency constellation mapping symbols carried on the 351 data tones of the 474 data tones, sequence restoration is performed, based on the seventh tone inverse-mapper, on reordered high-frequency constellation mapping symbols carried on the 72 data tones of data tones other than the 351 data tones of the 474 data tones, and sequence restoration is performed, based on the eighth tone inverse-mapper, on reordered high-frequency constellation mapping symbols carried on the remaining 51 data tones of the 474 data tones.

According to a third aspect, a communication method is provided, including: transmitting a physical layer protocol data unit (Physical Protocol Data Unit, PPDU) according to a tone plan, where the tone plan is a tone plan of a high frequency band; and the tone plan includes a pilot tone plan, and in the pilot tone plan, a quantity of pilot tones is greater than a preset value.

Based on the foregoing technical solution, a proper tone plan is designed for the high frequency band, where the quantity of pilot tones in the pilot tone plan is greater than the preset value. In a high frequency band communication scenario, the quantity of pilot tones may be increased, to reduce a packet error rate in the high frequency band communication scenario.

With reference to the third aspect, in some implementations of the third aspect, the tone plan is a 160 MHz or 320 MHz tone plan (in other words, the PPDU is carried on a 160 MHz or 320 MHz bandwidth, or the PPDU is carried on 64 tones), and the quantity of pilot tones is greater than 4.

With reference to the third aspect, in some implementations of the third aspect, the quantity of pilot tones is 10, indexes of the pilot tones are {-25, -20, -15, -10, -5, 5, 10, 15, 20, 25} or {-24, -19, -14, -9, -4, 4, 9, 14, 19, 24}, and pilot values of the pilot tones include at least one of the following: [1 -1 1 1 1 -1 -1 1 1 1], [1 1 1 -1 -1 1 1 1 1 -1], [1 1 1 -1 1 1 1 -1 -1 1 1], or [1 1 1 -1 -1 1 1 1 1 -1].

With reference to the third aspect, in some implementations of the third aspect, the quantity of pilot tones is 12, indexes of the pilot tones are {-24, -20, -16, -12, -8, -4, 4, 8, 12, 16, 20, 24}, and pilot values of the pilot tones include at least one of the following: [1 1 1 -1 1 1 1 -1 -1 1 1 1, [1 1 1 -1 -1 1 1 1 1 1 1 -1 1, or [1 1 1 -1 -1 1 1 1 1 -1 -1 1].

With reference to the third aspect, in some implementations of the third aspect, the quantity of pilot tones is 14, indexes of the pilot tones are {-27, -23, -19, -15, -11, -7, -3, 3, 7, 11, 15, 19, 23, 27}, and pilot values of the pilot tones include [1 1 1 -1 -1 1 1 1 1 -1 -1 1 1 1] or [1 1 1 -1 -1 1 1 1 1 1 1 -1 -1 1].

Specifically, in a noise and interference environment, the quantity of pilot tones is increased through a simulation experiment, until a signal-to-noise ratio corresponding to a packet error rate (for example, commonly referenced 1% at a high frequency) does not significantly decrease. In this case, it may be considered that a corresponding quantity of pilot tones is a proper quantity of pilot tones. If the PPDU is carried on 64 tones, the quantity of pilot tones may be gradually increased from 4, and the signal-to-noise ratio corresponding to the packet error rate of 1% is in a decreasing trend. When the quantity of pilots is increased to 12 to 14, the signal-to-noise ratio corresponding to the packet error rate of 1% on a link tends to be stable. If pilots continue to be added, the signal-to-noise ratio corresponding to the packet error rate of 1% no longer significantly decreases. Therefore, selecting the quantity of pilot tones of 10, 12, or 14 can reduce the packet error rate in a 160 MHz or 320 MHz bandwidth communication scenario.

With reference to the third aspect, in some implementations of the third aspect, the tone plan is a 320 MHz or 640 MHz tone plan (in other words, the PPDU is carried on a 320 MHz or 640 MHz bandwidth), and the quantity of pilot tones is greater than 6.

With reference to the third aspect, in some implementations of the third aspect, the quantity of pilot tones is 14, indexes of the pilot tones are {-53, -45, -37, -29, -21, -13, -5, 5, 13, 21, 29, 37, 45, 53} or {-55, -53, -39, -25, -18, -11, -6, 6, 11, 18, 25, 39, 53, 55}, and pilot values of the pilot tones include [1 1 1 -1 -1 1 1 1 1 -1 -1 1 1 1] or [1 1 1 -1 -1 1 1 1 1 1 1 -1 - 1 1].

With reference to the third aspect, in some implementations of the third aspect, the quantity of pilot tones is 16, indexes of the pilot tones are {-54, -47, -40, -33, -26, -19, -12, - 5, 5, 12, 19, 26, 33, 40, 47, 54}, and pilot values of the pilot tones include at least one of the following: [1 1 1 -1 -1 1 1 1 1 1 1 -1 -1 1 1 1], [1 1 1 -1 1 1 1 -1 -1 1 1 1 1 -1 -1 1], [1 1 1 -1 -1 1 1 1 1 1 -1 -1 1 1 1 1 -1], or [1 -1 1 1 1 -1 -1 1 1 1 1 -1 -1 1 1 1].

If the PPDU is carried on 128 tones, the quantity of pilot tones is increased through a simulation experiment. For example, the quantity of pilot tones may be gradually increased from 6, and a signal-to-noise ratio corresponding to a packet error rate of 1% is in a decreasing trend. When the quantity of pilots is increased to 14 to 16, the signal-to-noise ratio corresponding to the packet error rate of 1% on a link tends to be stable. If pilots continue to be added, the signal-to-noise ratio corresponding to the packet error rate of 1% no longer significantly decreases. Therefore, selecting the quantity of pilot tones of 14 or 16 can reduce the packet error rate in a 320 MHz or 640 MHz bandwidth communication scenario.

With reference to the third aspect, in some implementations of the third aspect, the tone plan is a tone plan of 640 MHz or 1280 MHz (or the PPDU is carried on a 640 MHz or 1280 MHz bandwidth), and the quantity of pilot tones is greater than 8.

With reference to the third aspect, in some implementations of the third aspect, the quantity of pilot tones is 14, indexes of the pilot tones are {-112, -95, -78, -61, -44, -27, -10, 10, 27, 44, 61, 78, 95, 112}, and pilot values of the pilot tones include [1 1 1 -1 -1 1 1 1 1 -1 -1 1 1 1] or [1 1 1 -1 -1 1 1 1 1 1 1 -1 -1 1].

With reference to the third aspect, in some implementations of the third aspect, the quantity of pilot tones is 16, indexes of the pilot tones are {-114, -99, -84, -69, -54, -39, -24, - 9, 9, 24, 39, 54, 69, 84, 99, 114}, and pilot values of the pilot tones include at least one of the following: [1 1 1 -1 -1 1 1 1 1 1 1 -1 -1 1 1 1], [1 1 1 -1 1 1 1 -1 -1 1 1 1 1 -1 -1 1], [1 1 1 -1 -1 1 1 1 1 1 -1 -1 1 1 1 1 -1], or [1 -1 1 1 1 -1 -1 1 1 1 1 -1 -1 1 1 1].

With reference to the third aspect, in some implementations of the third aspect, the quantity of pilot tones is 18, indexes of the pilot tones are {-112, -99, -86, -73, -60, -47, -34, - 21, -8, 8, 21, 34, 47, 60, 73, 86, 99, 112}, and pilot values of the pilot tones include [1 1 1 -1 1 1 1 -1 -1 1 1 1 1 -1 -1 1 1 1] or [1 -1 1 1 1 -1 -1 1 1 1 1 1 1 -1 -1 1 1 1].

If the PPDU is carried on 256 tones, the quantity of pilot tones is increased through a simulation experiment. For example, the quantity of pilot tones may be gradually increased from 8, and a signal-to-noise ratio corresponding to a packet error rate of 1% is in a decreasing trend. When the quantity of pilots is increased to 14 to 18, the signal-to-noise ratio corresponding to the packet error rate of 1% on a link tends to be stable. If pilots continue to be added, the signal-to-noise ratio corresponding to the packet error rate of 1% no longer significantly decreases. Therefore, selecting the quantity of pilot tones of 14, 16, or 18 can reduce the packet error rate in a 320 MHz or 640 MHz bandwidth communication scenario.

With reference to the third aspect, in some implementations of the third aspect, the tone plan is a tone plan of 1280 MHz or 2560 MHz (or the PPDU is carried on a 1280 MHz or 2560 MHz bandwidth), and the quantity of pilot tones is greater than 16.

With reference to the third aspect, in some implementations of the third aspect, the quantity of pilot tones is 24, indexes of the pilot tones are {-231, -211, -191, -171, -151, -131, -111, -91, -71, -51, -31, -11, 11, 31, 51, 71, 91, 111, 131, 151, 171, 191, 211, 231}, and pilot values of the pilot tones include [1 1 1 -1 -1 1 1 1 1 1 1 -1 -1 1 1 1 1 1 1 -1 -1 1 1 1].

Based on the foregoing technical solution, quantities of pilot tones in different bandwidth communication scenarios are designed, to meet transmission in different bandwidths while reducing the packet error rate.

According to a fourth aspect, a communication apparatus is provided. The communication apparatus is configured to perform the method according to any one of the first aspect to the third aspect and the implementations of the first aspect to the third aspect. Specifically, the communication apparatus may include units and/or modules (for example, a processing unit and a transceiver unit) configured to perform the method according to any one of the first aspect to the third aspect and the implementations of the first aspect to the third aspect.

In an implementation, the communication apparatus is a transmit end device. The transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in a transmit end device. In this case, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a fifth aspect, this application provides a processor, configured to perform the method according to the first aspect to the third aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable storage medium stores a computer program. When the computer program is run on a communication apparatus, the communication apparatus is enabled to perform the method according to any one of the implementations of the first aspect to the third aspect.

According to a seventh aspect, a computer program product including instructions is provided. When the computer program product runs on a computer, the computer is enabled to perform the method according to any one of the implementations of the first aspect to the third aspect.

According to an eighth aspect, a chip is provided. The chip includes a processor and a communication interface. The processor reads, through the communication interface, instructions stored in a memory, to perform the method according to any one of the implementations of the first aspect to the third aspect

Optionally, in an implementation, the chip further includes a memory. The memory stores a computer program or instructions. The processor is configured to execute the computer program or the instructions stored in the memory. When the computer program or the instructions are executed, the processor is configured to perform the method according to any one of the implementations of the first aspect to the third aspect.

According to a ninth aspect, a communication system is provided, including the communication apparatus according to the third aspect.

**BRIEF DESCRIPTION OF DRAWINGS**

FIG. 1 is a diagram of a communication system applicable to a method according to an embodiment of this application;
(a) to (d) in FIG. 2 show several different PPDU frame formats;
FIG. 3(a) shows a process of an OFDM symbol;
FIG. 3(b) shows a process of decoding an OFDM symbol;
FIG. 4(a) and FIG. 4(b) are diagrams of different resource unit allocation manners;
FIG. 5 is a schematic flowchart of a communication method according to an embodiment of this application;
FIG. 6 is an effect diagram of a pilot tone quantity selection according to an embodiment of this application;
FIG. 7 is an effect diagram of another pilot tone quantity selection according to an embodiment of this application;
FIG. 8 is an effect diagram of still another pilot tone quantity according to an embodiment of this application;
FIG. 9 is a schematic flowchart of another communication method according to an embodiment of this application;
FIG. 10 is a schematic flowchart of still another communication method according to an embodiment of this application;

FIG. 11 is a block diagram of a communication apparatus 10 according to an embodiment of this application;

FIG. 12 is a diagram of another communication apparatus 20 according to an embodiment of this application; and

FIG. 13 is a diagram of a chip system 30 according to an embodiment of this application.

## DESCRIPTION OF EMBODIMENTS

The following describes technical solutions in embodiments of this application with reference to accompanying drawings.

A communication method provided in embodiments of this application may be applied to a wireless communication system in which a transmit end device communicates with a receive end device. Specifically, the transmit end device generates a physical layer protocol data unit (Physical Protocol Data Unit, PPDU), and sends the PPDU to the receive end device through a high-frequency channel.

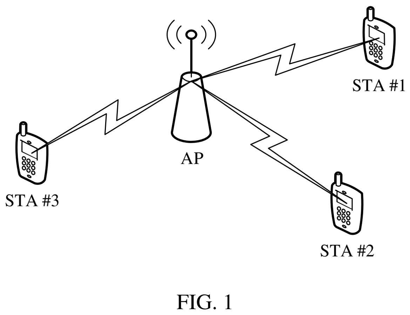

For example, the wireless communication system may be a Wi-Fi wireless communication system. As shown in FIG. 1, the Wi-Fi wireless communication system includes one or more access points (Access Point, AP) and one or more stations (station, STA) (also referred to as a non-AP station (non-AP station, non-AP STA)). In FIG. 1, communication between one AP (an AP shown in FIG. 1) and three STAs (a STA #1, a STA #2, and a STA #3 shown in FIG. 1) is used as an example. The transmit end device in embodiments of this application may be an AP or a non-AP STA, and the receive end device may also be an AP or a non-AP STA. For example, when the transmit end device may be an AP, the receive end device is a non-AP STA. For another example, when the transmit end device may be a non-AP STA, the receive end device is an AP. To be specific, a device in the Wi-Fi wireless communication system may serve as both a transmit end device and a receive end device.

For example, in embodiments of this application, the AP and the non-AP STA each include but are not limited to a server, a router, a switch, a bridge, a computer, a mobile phone, and the like.

As an example rather than a limitation, the AP may be an access point for a terminal device (for example, a mobile phone) to access a wired (or wireless) network, and is mainly deployed at home, in a building, and in a park, with a typical coverage radius ranging from tens of meters to hundreds of meters, or certainly, may be deployed outdoors. The AP is equivalent to a bridge that connects a wired network and a wireless network. A main function of the AP is to connect various wireless network clients together and then connect the wireless network to the Ethernet.

As an example rather than a limitation, the non-AP STA may be a wireless communication chip, a wireless sensor, a wireless communication terminal, or the like, and may also be referred to as a user. For example, the non-AP STA may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communication device supporting a Wi-Fi communication function, or a computer supporting a Wi-Fi communication function.

For example, the AP and the non-AP STA may be devices used in vehicle-toeverything, internet of things (internet of things, IoT) nodes, sensors, or the like in an internet of things, smart cameras, smart remote controls, or smart water or electricity meters in a smart home, or sensors in a smart city.

For another example, the AP and the non-AP STA may be devices supporting a next-generation standard (for example, ultra high reliability (Ultra High reliability, UHR)) of 802.11be.

It should be understood that the technical solutions in embodiments of this application are applicable to not only communication between an AP and one or more non-AP STAs, but also mutual communication between APs and mutual communication between non-AP STAs. For ease of description, embodiments of this application are described only by using an example in which an AP communicates with one or more non-AP STAs. However, this description manner does not constitute any limitation on an actual application scope of the technical solutions in embodiments of this application. This is described herein once for all, and details are not described below again.

From 802.11a/g to 802.11n, 802.11ac, 802.11 ax, and the latest 802.11be for a WLAN, used frequencies are extended from 2.4G only to 2.4G/5G and then to 2.4G/5G/6G at present, and a supported bandwidth is extended from 20 MHz to 320 MHz. Spectral efficiency and a throughput are continuously improved. A next-generation WLAN technology (for example, UHR) is to further improve a physical layer capability, and introduction of a millimeter-wave band, for example, 45 GHz/60 GHz, is one of important considerations.

For ease of understanding embodiments of this application, several basic concepts in embodiments of this application are briefly described.

1. PPDU frame structure: The PPDU frame structure in this application usually includes a preamble (Preamble) part and a data (Data) part. A physical layer signal is sent by using a PPDU. In different WLAN protocols, a PPDU frame structure varies to some extent. Optionally, the PPDU frame structure in this application includes but is not limited to the following types:

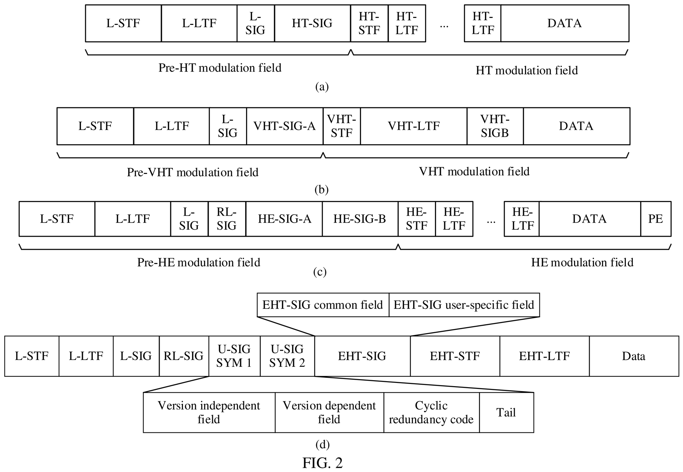

(1) A PPDU frame structure in a high throughput (High Throughput, HT) mode defined in the 802.11n standard: As shown in (a) in FIG. 2, a PPDU in the HT mode may be divided into two parts: a preamble part and a data part.

One part is the preamble part in which a modulation scheme of a legacy frame is used, referred to as a pre-HT field and including a legacy preamble (for example, L-STF or L-LTF), a legacy signal (for example, L-SIG), and a high throughput signal field (High Throughput Signal Field, HT-SIG). The preamble part further includes a part in which HT modulation is used, referred to as an HT field and including a high throughput short training field (High Throughput Short Training Field, HT-STF) and a high throughput long training field (High Throughput Long Training Field, HT-LTF).

The other part is the data part in which HT modulation is used, referred to as a data (Data) field.

(2) A PPDU frame structure in a very high throughput (Very High Throughput, VHT) mode defined in the 802.11ac standard: As shown in (b) in FIG. 2, a PPDU in the VHT mode may be divided into two parts.

One part is a preamble part in which a modulation scheme of a legacy frame is used, referred to as a pre-VHT field and including a legacy preamble (for example, L-STF or L-LTF), a legacy signal (for example, L-SIG), and a very high throughput signal field A (Very High Throughput Signal Field A, VHT-SIG-A). The preamble part further includes a part in which VHT modulation is used, referred to as a VHT field and including a very high throughput short training field (Very High Throughput Short Training Field, VHT-STF), a very high throughput long training field (Very High Throughput Long Training Field, VHT-LTF), and a very high throughput signal field B (Very High Throughput Signal Field B, VHT-SIG-B).

The other part is a data part in which VHT modulation is used, referred to as a data (Data) field.

(3) A PPDU frame structure in a high efficiency (High Efficiency, HE) mode defined in the 802.11ax standard: As shown in (c) in FIG. 2, a PPDU in the HE mode may be divided into two parts.

A preamble part includes a pre-HE field. Specifically, the pre-HE field includes a legacy preamble (L-STF or L-LTF), a legacy signal (L-SIG, or Repeated Legacy-Signal Field, RL-SIG), a high efficiency signal field A (HE-SIG-A, High Efficiency Signal Field A), and a high efficiency signal field B (HE-SIG-B, High Efficiency Signal Field B) in the PPDU. The preamble part further includes a high efficiency short training field (HE-STF, High Efficiency Short Training Field) and a high efficiency long training field (HE-LTF, High Efficiency Long Training Field).

The other part is a data (Data) part.

The high efficiency short training field, the high efficiency long training field, and the data part of the preamble part are referred to as an HE field.

(4) A PPDU frame structure defined in the 802.11be standard: (d) in FIG. 2 shows a frame structure of an extremely high throughput (extremely high throughput, EHT) PPDU used in 802.11be.

The EHT PPDU may be divided into two parts.

A preamble part includes a legacy preamble (legacy preamble, L-preamble) and an extremely high throughput preamble (extremely high throughput preamble, EHT-preamble).

The L-preamble part includes an L-STF field, an L-LTF field, and an L-SIG field.

The EHT-preamble part includes an RL-SIG field, a universal field (universal SIG, U-SIG) field, an extremely high throughput signal (EHT-SIG) field, an extremely high throughput short training field (extremely high throughput short training field, EHT-STF), and an extremely high throughput long training field (extremely high throughput long training field, EHT-LTF).

The U-SIG field occupies two OFDM symbols, for example, U-SIG SYM 1 and U-SIG SYM 2 shown in (d) in FIG. 2. The universal field (U-SIG) field may include a version independent information (version independent info) field, a version dependent information (version dependent info) field, a cyclic redundancy code (cyclic redundancy code, CRC) field, and a tail field. The version independent info field may include a 3-bit wireless fidelity (wireless fidelity, Wi-Fi) version field, a 1-bit downlink/uplink field, a BSS color field including at least 6 bits, and a transmit opportunity (transmit opportunity, TXOP) field including at least 7 bits.

Further, the version independent info field may further include a bandwidth field. The version dependent info field may include a PPDU format field and the like, and may further include one or more of a modulation and coding scheme field, a spatial stream field, a coding field, and other fields. The CRC field occupies at least 4 bits, and the tail field occupies at least a 6-bit tail bit field.

A data part includes a physical layer convergence protocol service data unit (physical layer convergence protocol service data unit, PSDU).

It can be understood that the 802.11n, the 802.11ac, the 802.11ax, and the 802.11be are all WLAN protocols based on an OFDM technology. In addition, it should be noted that the PPDU frame format in embodiments of this application is not limited to the several PPDU frame formats defined in the foregoing protocols. The foregoing several PPDU frame formats are merely examples, and do not constitute any limitation on the protection scope of this application. For example, the PPDU frame format in embodiments of this application may alternatively be a PPDU defined in a next-generation or future WLAN protocol.

2. OFDM technology: OFDM is a basic transmission mode in current wireless communication, and is widely used in wireless communication systems such as LTE, worldwide interoperability for microwave access (worldwide interoperability for microwave access, WiMAX), and Wi-Fi. In addition, the OFDM is further used in fixed network transmission, for example, in a transmission mode in which an optical fiber, a stranded copper wire, a cable, or the like is used. A basic principle of the OFDM is as follows: A to-be-sent signal is divided into N sub-signals within an allowed range based on orthogonality of tones, and then N orthogonal tones are modulated by using the N sub-signals respectively. Because spectra of the tones overlap with each other, high spectral efficiency can be obtained. In addition, in the OFDM technology, a tone spacing is compressed to a minimum value. This can ensure that a plurality of parallel channels without mutual interference are formed, and can also improve frequency utilization of a system.

For example, an implementation based on the OFDM technology may include: At a transmit end, serial-to-parallel conversion and IFFT transformation are sequentially performed on a to-be-sent signal. Then parallel data is converted into serial data, and a guard interval (also referred to as a "cyclic prefix") is added to the serial data to form an OFDM symbol. When clocks at the transmit end and a receive end are synchronized (if the clocks are not synchronized, clock synchronization needs to be performed first), a process of demodulating a received signal by the receive end may include: analog-to-digital conversion, serial-to-parallel conversion, cyclic prefix removal, DFT, residual frequency offset and phase noise processing (namely, pilot signal processing), channel equalization, parallel-to-serial conversion, numerical demodulation, and channel decoding. After receiving a signal, the receive end converts an analog signal into a digital signal via an analog-to-digital converter. Similar to a case at the transmit end, one of parameters of a digital-to-analog converter is a sampling point rate or a carrier spacing.

It can be understood that, in a WLAN technology, a tone of an OFDM symbol may include a guard tone, a direct current tone, a data tone, and a pilot tone. The guard tone and the direct current tone do not carry a signal. This may also be considered as that values of signals carried on the guard tone and the direct current tone are 0. The data tone is used to carry payload information. The pilot tone is used to carry a pilot signal. A value of the pilot signal is usually 1 or -1, and the pilot signal is used to estimate a residual frequency offset and phase noise.

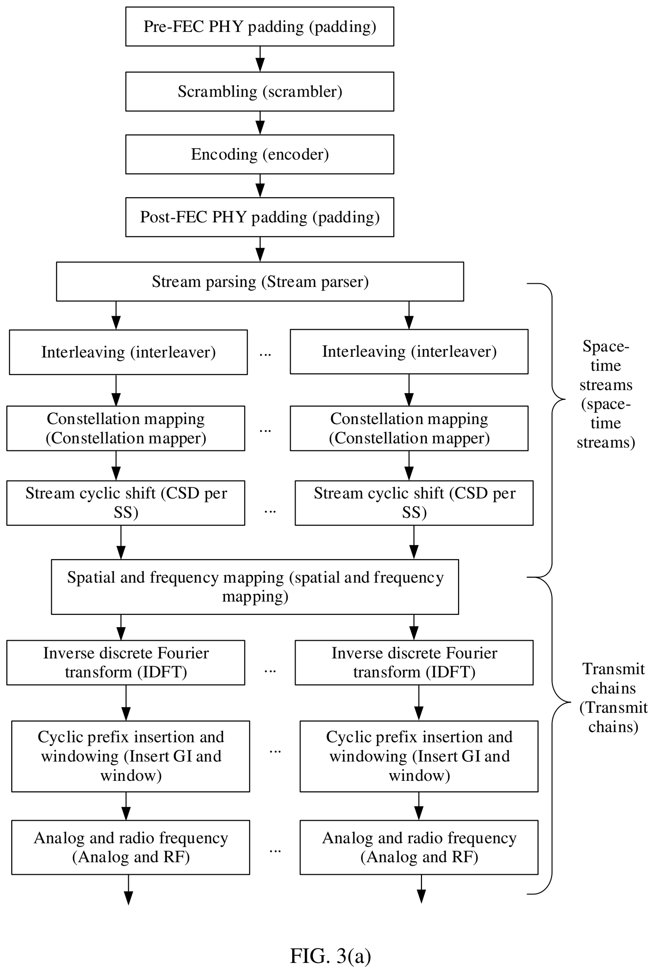

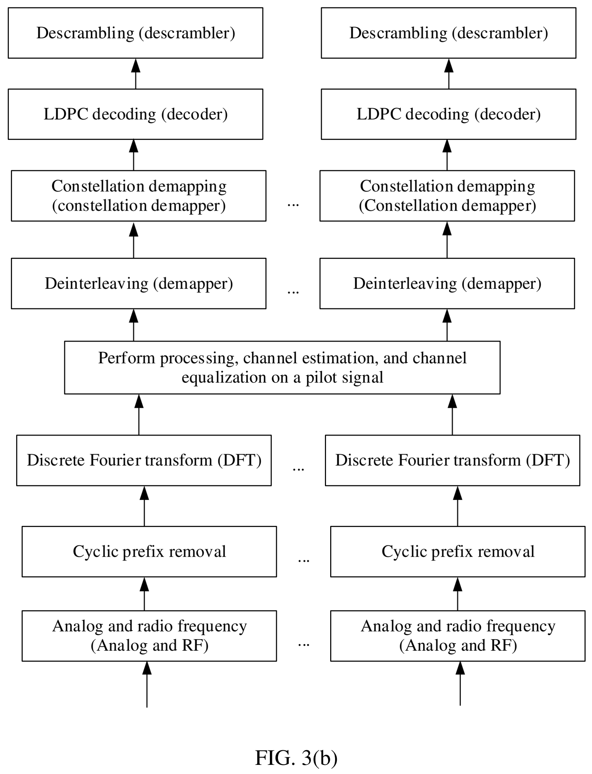

For ease of understanding, a process of generating an OFDM symbol and a process of decoding the OFDM symbol are described in detail with reference to FIG. 3(a) and FIG. 3(b).

An OFDM signal generation circuit shown in FIG. 3(a) includes parts such as PHY padding, scrambling, low-density parity-check (Low Density Parity Check, LDPC) code encoding, stream parsing, constellation mapping, LDPC tone mapping, stream cyclic shift, spatial and frequency mapping, inverse discrete Fourier transform, cyclic prefix insertion and windowing, and analog and radio frequency.

An OFDM symbol decoding circuit shown in FIG. 3(b) includes parts such as analog and radio frequency, cyclic prefix removal, discrete Fourier transform, pilot processing, channel estimation, channel equalization, deinterleaving, constellation demapping, LDPC decoding, and descrambling.

3. Orthogonal frequency division multiple access (orthogonal frequency division multiple access, OFDMA) technology: tones that do not interfere with each other in an OFDM symbol are allocated to multiple users, and multi-user access or data transmission can be implemented by using the OFDM symbol, that is, the OFDMA technology. The OFDMA technology can be used for concurrent transmission of multi-user data, and is an effective way to improve data transmission concurrency.

4. Resource unit (Resource Unit, RU): After an OFDMA technology is introduced in the 802.11ax standard, the standard allows one bandwidth to be divided into a plurality of RUs. RU types include a 26-tone RU, a 52-tone RU, a 106-tone RU, a 242-tone RU, a 484-tone RU, a 996-tone RU, a 2×996-tone RU, and the like. Tone represents a tone. For example, the 26-tone RU represents a RU including 26 contiguous tones, or a RU including a group of 13 contiguous tones and another group of 13 contiguous tones.

Each RU may be allocated to one user, to implement more refined division of spectrum resources, so as to implement more flexible frequency resource scheduling. There are two types of RUs in the standard: a large-size RU and a small-size RU. An RU greater than or equal to the 242-tone RU (a 20 MHz bandwidth) is referred to as a large-size RU, and an RU smaller than the 242-tone RU is referred to as a small-size RU. Generally, one RU greater than or equal to the 242-tone RU may be allocated to one or more user equipments for use. The user equipment in this application may be understood as a STA. The RU on the bandwidth includes a data (Data) tone and a pilot (Pilot) tone. The data tone is used to carry data information from an upper layer. The pilot tone transfers a fixed value, and is used by a receive end to estimate a phase, perform phase correction, and the like.

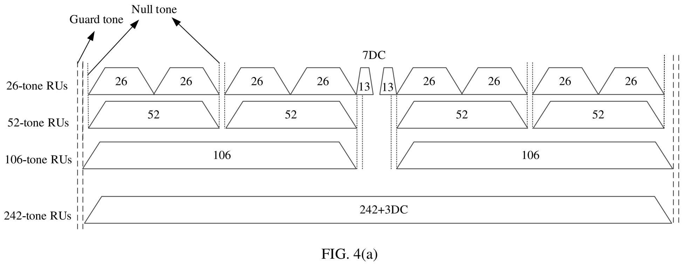

When the bandwidth is 20 MHz, FIG. 4(a) is a diagram of a possible resource unit allocation manner used when the bandwidth is 20 MHz. The entire 20 MHz bandwidth may include an entire 242-tone RU, or may include any combination of a 26-tone RU, a 52-tone RU, and a 106-tone RU. In addition to the contiguous RU used for data transmission, the bandwidth further includes some guard (Guard) tones, null tones, or direct current (direct current, DC) tones.

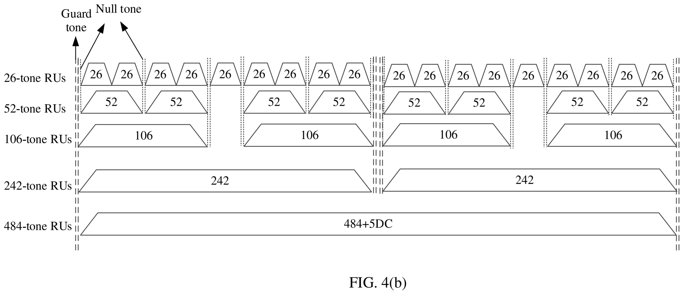

When the bandwidth is 40 MHz, FIG. 4(b) is a diagram of a possible resource unit allocation manner used when the bandwidth is 40 MHz. The entire bandwidth is roughly equivalent to a replication of tone distribution of the 20 MHz bandwidth. The entire 40 MHz bandwidth may include an entire 484-tone RU, or may include any combination of a 26-tone RU, a 52-tone RU, a 106-tone RU, and a 242-tone RU.

When the channel bandwidth is 80 MHz: The entire bandwidth is roughly equivalent to a replication of tone distribution of two 40 MHz bandwidths. The entire 80 MHz bandwidth may include an entire 996-tone RU, or may include any combination of a 484-tone RU, a 242-tone RU, a 106-tone RU, a 52-tone RU, and a 26-tone RU.

When the bandwidth is 160 MHz or 80+80 MHz, the entire bandwidth may be considered as a replication of tone distribution of two 80 MHz bandwidths. The entire bandwidth may include an entire 2×996-tone RU, or may include any combination of a 26-tone RU, a 52-tone RU, a 106-tone RU, a 242-tone RU, a 484-tone RU, and a 996-tone RU. The 2×996-tone RU is an RU including tones of two contiguous 996-tone RUs.

Similarly, when the bandwidth is 320 MHz, the entire bandwidth may be considered as a replication of tone distribution of two 160 MHz bandwidths. The entire bandwidth may include an entire 4×996-tone RU, or may include any combination of a 26-tone RU, a 52-tone RU, a 106-tone RU, a 242-tone RU, a 484-tone RU, and a 996-tone RU.

The 26-tone RU, the 52-tone RU, the 106-tone RU, the 242-tone RU, and the 484-tone RU are RUs including a plurality of contiguous tones, or RUs including two groups of contiguous tones. Such RUs may be understood as contiguous RUs.

The contiguous RU in this application is an RU including a plurality of contiguous tones, or the contiguous RU is an RU including two groups of contiguous tones. A plurality of tones included in each group of contiguous tones are contiguous, and two groups of tones are spaced only by a guard (Guard) tone, a null tone, or a direct current (direct current, DC) tone. All RUs supported in the 802.11ax may be understood as contiguous RUs. The contiguous RU may also be referred to as a common RU (common RU, CRU). Certainly, in another embodiment, the contiguous RU may have another name. A name of the contiguous RU is not limited in this application.

5. Multiple resource unit (Multiple Resource Unit, MRU): A new frequency resource unit, namely, the MRU, is defined in the 802.11be standard. A plurality of RUs are allowed to be allocated to a same user, to implement more flexible frequency resource allocation. An MRU formed by combining large-size RUs is a large-size MRU, and an MRU formed by combining small-size RUs is a small-size MRU.

In the existing standard, there are two types of small-size MRUs: a 52+26-tone MRU and a 106+26-tone MRU. In the existing standard, large-size MRU types include a 484+242-tone MRU, a 996+484-tone MRU, a 996+484+242-tone MRU, a 2×996+484-tone MRU, a 3×996-tone MRU, and a 3×996+484-tone MRU.

6. Low-density parity-check (Low Density Parity Check, LDPC) code tone mapper (LDPC tone mapper): An objective of the LDPC tone mapper is to map contiguous quadrature amplitude modulation (Quadrature Amplitude Modulation, QAM) symbols to non-contiguous tones to obtain frequency domain diversity, and this is usually implemented based on a rowcolumn interleaver. The mathematical expression is as follows:

$$d'_k = d_{t(k)}.$$

$d'_k$ represents a QAM symbol whose index is k and that is output by the LDPC tone mapper, and $d_{t(k)}$ represents a QAM symbol whose index is t(k) and that is input into the LDPC tone mapper.

$t(k) = D_{TM} \cdot \left( k \bmod \frac{N_{SD}}{D_{TM}} \right) + \left\lfloor \frac{k \cdot D_{TM}}{N_{SD}} \right\rfloor$, k = 0,1, ... , and $N_{SD}$ - 1. $N_{SD}$ represents a quantity of data tones, $D_{TM}$ represents a tone mapping distance parameter, and the tone mapping distance parameter $D_{TM}$ is a common divisor of $N_{SD}$.

The LDPC tone mapper involved in the current protocol may be summarized as follows:

$$N_{SD}=48=3\times16,$$

and $D_{TM}$=3, applicable to a 52-tone RU;

$$N_{SD}=36=3\times12,$$

and $D_{TM}$=3, applicable to a 52+26-tone MRU using a dual-carrier modulation (Dual Carrier Modulation, DCM) mechanism, where the DCM mechanism is a modulation scheme in which a same information bit sequence is mapped into a pair of QAM symbols and carried on two tones, to obtain frequency domain diversity;

$$N_{SD}=52=4\times13,$$

and $D_{TM}$=4, applicable to a 20 M bandwidth signal;

$$N_{SD}=72=4\times18,$$

and $D_{TM}=4$, applicable to a 52+26-tone MRU;

$$N_{SD}=63=3\times21,$$

and $D_{TM}=3$, applicable to a DCM-106+26-tone MRU;

$$N_{SD}=102=6\times17,$$

and $D_{TM}=6$, applicable to a 106-tone RU;

$$N_{SD}=117=9\times13,$$

and $D_{TM}=9$, applicable to a DCM-242-tone RU;

$$N_{SD}=108=6\times18,$$

and $D_{TM}=6$, applicable to a 40 M bandwidth signal;

$$N_{SD}=351=9\times39,$$

and $D_{TM}=9$, applicable to a DCM-484+242-tone MRU;

$$N_{SD}=126=6\times21,$$

and $D_{TM}=6$, applicable to a 106+26-tone MRU;

$$N_{SD}=490=14\times35,$$

and $D_{TM}=14$, applicable to a DCM-996-tone RU;

$$N_{SD}=234=9\times26,$$

and $D_{TM}=9$, applicable to an 80 M bandwidth signal or a 242-tone RU;

$$N_{SD}=468=12\times39,$$

and $D_{TM}=12$, applicable to a 484-tone RU;

$$N_{SD}=702=18\times39,$$

and $D_{TM}=18$, applicable to a 484+242-tone MRU; and

$$N_{SD}=980=20\times49,$$

and $D_{TM}=20$, applicable to a 996-tone RU.

7. Pilot tone (pilot tone) operating mode: For example, a 20 M bandwidth signal in the 11ac protocol has 64 tones, and index values of the tones are [-32:31]. There are four pilot tones, and index values are [-21, -7, 7, 21]. A value of the pilot tone is related to an index of a data symbol. First, four values $\Psi_0 = 1$, $\Psi_1 = 1$, $\Psi_2 = 1$, and $\Psi_3 = -1$ are specified. For the nth data symbol, pilot values of pilot tones [-21, -7, 7, 21] of the nth data symbol are successively

$$\left[\Psi_{n\ mod\ 4} \quad \Psi_{(n+1)\ mod\ 4} \quad \Psi_{(n+2)\ mod\ 4} \quad \Psi_{(n+3)\ mod\ 4}\right]$$ . For example, if an index value n of a first data symbol is 0, pilot values in the first data symbol are $[\Psi_0\ \Psi_1\ \Psi_2\ \Psi_3]$; if an index value n of a second data symbol is 1, pilot values in the second data symbol are $[\Psi_1\ \Psi_2\ \Psi_3\ \Psi_0]$; if an index value n of a third data symbol is 2, pilot values in the third

data symbol are [$\Psi_2$ $\Psi_3$ $\Psi_0$ $\Psi_1$]; and the rest can be deduced by analogy.

After the pilot values are determined, scrambling further needs to be performed on the four pilot tones, that is, the pilot tones are multiplied by $p_{n+4}$, where n represents an index value of a data symbol, a start value is 0, $p_{n+4}$ represents an (n+3)$^{th}$ element of a p-sequence, and the p-sequence is a 127-length sequence p ={ 1, 1, 1, 1, -1, -1, -1, 1, -1, -1, -1, -1, 1, 1, -1, 1, -1, - 1, 1, 1, -1, 1, 1, -1, 1, 1, 1, 1, 1, -1, 1, 1, 1, -1, 1, 1, -1, -1, 1, 1, 1, -1, 1, -1, -1, -1, 1, -1, 1, -1, -1, 1, -1, -1, 1, 1, 1, 1, -1, -1, 1, 1, -1, -1, 1, -1, 1, -1, 1, 1, -1, -1, -1, 1, 1, -1, -1, -1, - 1, 1, -1, -1, 1, -1, 1, 1, 1, 1, -1, 1, -1, 1, -1, 1, -1, -1, -1, -1, 1, -1, 1, 1, -1, 1, -1, 1, 1, 1, - 1, -1, 1, -1, -1, -1, 1, 1, 1, -1, -1, -1, -1, -1, -1, -1}.

In different bandwidths, pilot tone operating modes are the same, that is, quantities and values of the pilot tones are different.

For example, for a 40 M bandwidth, there are six pilot tones, indexes of the tones are [-53, -25, -11, 11, 25, 53], and values of the tones are [1 1 1 -1 -1 1].

For another example, for an 80 M bandwidth, there are eight pilot tones, indexes of the tones are [-103, -75, -39, -11, 11, 39, 75, 103], and values of the tones are [1 1 1 -1 -1 1 1 1].

For another example, for a 160 M bandwidth, two 80 M bandwidths are aggregated. There are 16 pilot tones, and indexes of the tones are [-231, -203, -167, -139, -117, -89, -53, - 25, 25, 53, 89, 117, 139, 167, 203, 231]. Values of the tones are obtained by concatenating two 80 M pilot values, that is, [1 1 1 -1 -1 1 1 1 1 1 1 -1 -1 1 1 1].

For example, when OFDMA is supported, pilot configuration is separately performed for RUs.

For example, for a 26-tone RU (an RU with 26 tones), there are two pilots, and values of the tones are [1, -1].

For another example, for a 52-tone RU and a 106-tone RU, there are four pilots, and values are [1 1 1 -1], which are consistent with values specified in the foregoing 20 M bandwidth signal.

For another example, for a 242-tone RU, there are eight pilots, and values are [1 1 1 - 1 -1 1 1 1], which are consistent with values specified in the foregoing 80 M bandwidth signal.

For another example, for a 484/996-tone RU, there are 16 pilots, and values are [1 1 1 -1 -1 1 1 1 1 1 -1 -1 1 1 1], which are obtained by concatenating two 8 pilot values, and are consistent with values specified in the foregoing 160 M bandwidth signal.

For another example, for a 2×996-tone RU, there are 32 pilots, and values are [1 1 1 - 1 -1 1 1 1 1 1 1 -1 -1 1 1 1 1 1 1 -1 -1 1 1 1 1 1 1 -1 -1 1 1 1], and are obtained by concatenating four 8 pilot values.

For example, when the MRU is supported, pilot configuration is separately performed for MRUs.

For example, for a 52+26-tone MRU and a 106+26-tone MRU, there are six pilots, and specified values are [1 1 1 -1 -1 1], which are consistent with values specified in the foregoing 40 M bandwidth signal.

For another example, for a 3×996-tone RU, there are 48 pilots, and specified values are obtained by concatenating six 8 pilot values.

For another example, for a 4×996-tone RU, there are 64 pilots, and specified values are obtained by concatenating eight 8 pilot values.

8. High frequency band physical layer signal: The high frequency band physical layer signal in this application may be understood as being obtained based on a physical layer signal carrier spacing defined in an extension protocol (for example, the 802.11n/802.11ac/802.11ax/802.11be protocol).

Specifically, for a high frequency band channel, in a signal sending process, a carrier spacing corresponding to the high frequency band channel is set to N times (N>1) a carrier spacing corresponding to a low frequency band channel. To be specific, the high frequency band physical layer signal is obtained by increasing a carrier spacing of a low frequency band physical layer signal. In this way, a manner of sending the high frequency band physical layer signal is similar to a manner of sending the low frequency band physical layer signal. This reduces complexity of designing a baseband chip compatible with a high frequency band and a low frequency band.

In addition, the following descriptions are first provided to facilitate understanding of embodiments of this application.

First, in this application, "indicate" may include "directly indicate" and "indirectly indicate". When a piece of indication information indicates A, the indication information may directly indicate A or indirectly indicate A, but it does not indicate that the indication information definitely carries A.

Information indicated by indication information is referred to as to-be-indicated information. During specific implementation, the to-be-indicated information is indicated in a plurality of manners, for example, but not limited to, the following manners: The to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Second, "at least one" shown in this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean execution sequences. The execution sequences of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, words such as "S510" are merely identifiers for ease of description, and do not limit a sequence of performing steps.

Third, in embodiments of this application, words such as "example" or "for example" are used to give an example, an illustration, or a description. Any embodiment or design scheme described as an "example" or "for example" in this application should not be explained as being more or having more advantages than another embodiment or design scheme. To be precise, use of the word such as "example" or "for example" is intended to present a relative concept in a specific manner.

Fourth, "store" in embodiments of this application may mean "stored in one or more memories". The one or more memories may be separately disposed, or may be integrated into an encoder, a decoder, a processor, or a communication apparatus. Alternatively, some of the one or more memories may be separately disposed, and some may be integrated into a decoder, a processor, or a communication apparatus. A type of the storage may be a storage medium in any form. This is not limited in this application.

Fifth, in embodiments of this application, a "protocol" may be a standard protocol in the communication field, for example, may include an NR protocol and a related protocol applied to a further communication system. This is not limited in this application.

Sixth, in embodiments of this application, "of (of)", "corresponding/relevant (corresponding/relevant)", "corresponding (corresponding)", and "associate (associate)" may sometimes be used interchangeably. It should be noted that expressed meanings are consistent when no difference between the terms is emphasized.

Seventh, in embodiments of this application, "in a case of", "when", and "if" may be used interchangeably sometimes. It should be noted that, when a difference between the three is not emphasized, meanings to be expressed are consistent.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification usually indicates an "or" relationship between associated objects.

With reference to FIG. 1, the foregoing briefly describes a scenario to which the communication method provided in embodiments of this application can be applied, describes basic concepts that may be used in embodiments of this application, and describes a pilot tone operating mode in the basic concepts. To achieve baseband reuse between a high frequency band and a low frequency band, a solution is to directly increase a carrier spacing of a low frequency signal, and send the low frequency signal in a high frequency band. However, because interference and noise of the high frequency band are different from those of the low frequency band, a quantity of pilot tones of the low frequency signal is no longer optimal, and a packet error rate significantly increases.

This application provides a communication method, to design a proper quantity of pilot tones for a high frequency band signal, and reduce a packet error rate of high frequency band signal transmission.

The following describes the technical solutions provided in this application in detail with reference to the accompanying drawings. Embodiments of this application may be applied to a plurality of different scenarios, including but not limited to the scenario shown in FIG. 1.

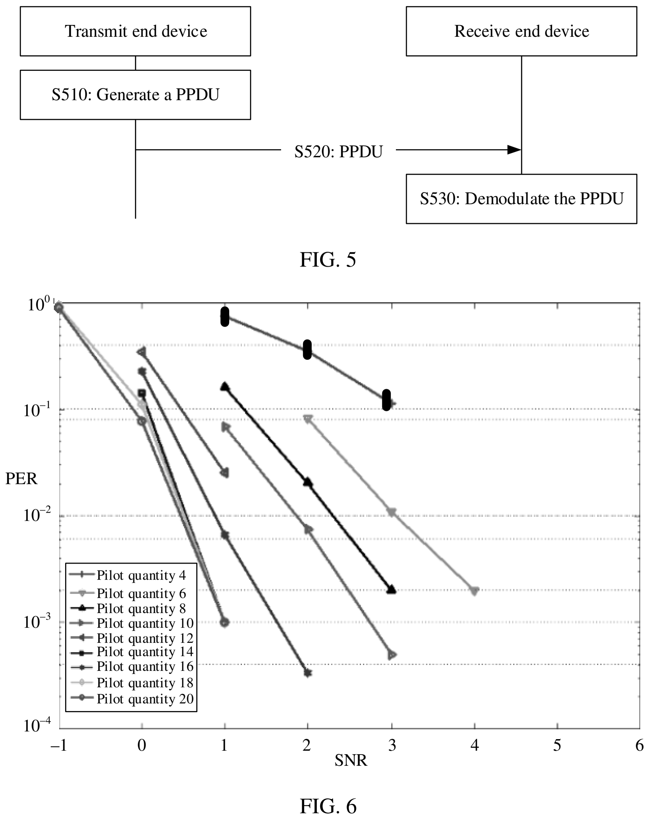

Without loss of generality, in the following, FIG. 5 describes in detail the communication method provided in embodiments of this application by using interaction between the transmit end device and the receive end device as an example. The transmit end device in embodiments of this application may be an access point AP, and the receive end device may be a non-access point non-AP (for example, a STA). Alternatively, the transmit end device may be an access point STA, and the receive end device may be a non-access point AP.

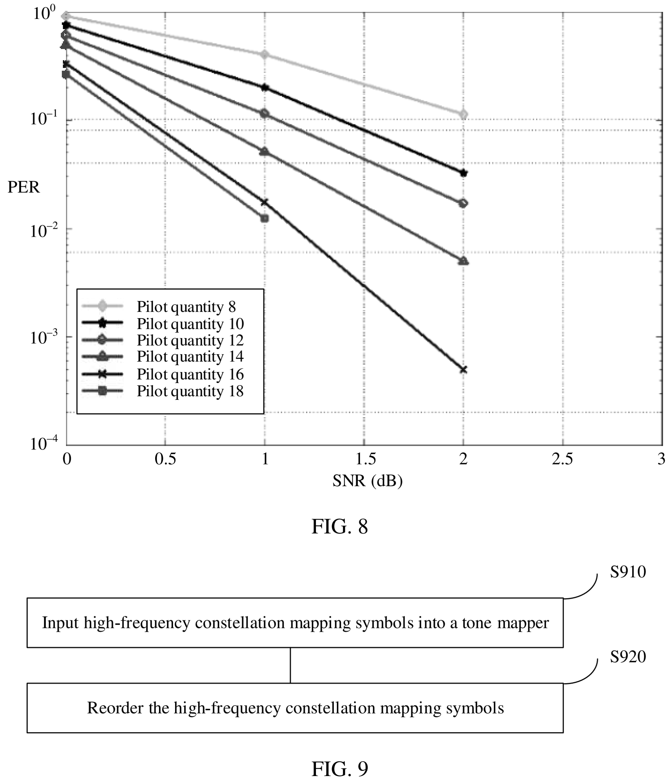

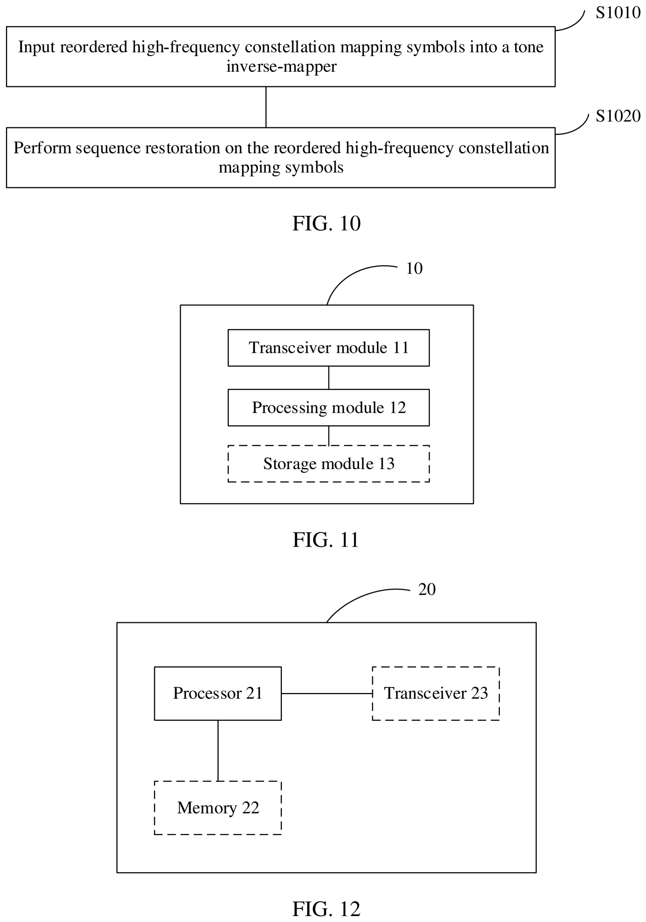

In addition, in the following, FIG. 9 describes reordering of constellation mapping symbols based on a tone mapper. A device that performs reordering is referred to as a reordering device (or an interleaving device), and may be an AP or a STA. FIG. 10 describes sequence restoration of the reordered constellation mapping symbols based on a tone inverse-mapper. A device that performs sequence restoration is referred to as a sequence restoration device (or a deinterleaving device), and may be an AP or a STA.

It should be understood that a specific structure of an entity for performing a method provided in embodiments of this application is not particularly limited in the following embodiments, provided that the entity can run a program that records code of the method provided in embodiments of this application to perform communication according to the method provided in embodiments of this application. For example, the entity for performing the method provided in embodiments of this application may be a receive end device or a transmit end device, or a functional module that is in a receive end device or a transmit end device and that can invoke the program and execute the program.

FIG. 5 is a schematic flowchart of a communication method according to an embodiment of this application. The method includes the following steps.

S510: Generate a physical layer protocol data unit PPDU.

It should be noted that a PPDU generation process is not limited in this embodiment. For details, refer to related descriptions of PPDU generation in an existing protocol.

S520: A transmit end device sends the PPDU to a receive end device.

After generating the PPDU, the transmit end device sends the PPDU based on a tone plan. Similarly, the receive end device receives the PPDU based on the tone plan, and demodulates the PPDU.

S530: The receive end device demodulates the PPDU.

In this embodiment, the tone plan is a tone plan designed for a high frequency band. In this application, the high frequency band may be understood as a high frequency band defined in a protocol standard (for example, 802.11aj/ay) for the high frequency band, including but not limited to one or more of 45 GHz/60 GHz.

Specifically, the tone plan may be understood as quantities of tones of different types based on different total quantities of tones that carry the PPDU, and includes, but is not limited to: a data tone plan and a pilot tone plan. This embodiment mainly relates to the pilot tone plan.

It can be learned from the foregoing that the tone plan in this embodiment is proposed for a high frequency band. Therefore, in the pilot tone plan, a quantity of pilot tones is greater than a preset value. For example, when the transmit end device directly increases a carrier spacing of a low frequency band Wi-Fi signal (the 11n/ac/ax/be protocol), and sends the low frequency band Wi-Fi signal in a high frequency band, to reduce a packet error rate of the receive end device, a quantity of pilot tones may be increased. The "preset value" may be understood as a quantity of pilot tones in the tone plan corresponding to a low frequency band.

For ease of understanding, the following describes, with reference to a specific example, how to design a quantity of pilot tones.

Example 1: The PPDU is carried on 64 tones. In other words, the PPDU is carried on a 160 MHz or 320 MHz bandwidth. In other words, the tone plan is a 160 MHz or 320 MHz tone plan.

In a case shown in Example 1, the quantity of pilot tones is greater than 4, and the "preset value" may be set to 4 or a positive integer greater than 4.

For example, a value that is of the quantity of pilot tones and that is greater than 4 may be any one of 10, 12, or 14. FIG. 6 shows packet error rate performance in a case in which a total quantity of tones is 64 and values of the quantity of pilot tones are 4, 6, 8, 10, 12, 14, 16, 18, and 20.

Generally, the quantity of pilot tones is determined through simulation. In a specific noise and interference environment, the quantity of pilot tones is continuously increased until a signal-to-noise ratio corresponding to a packet error rate (for example, commonly referenced 1% at a high frequency) does not significantly decrease. In this case, it is considered that a proper quantity of pilot tones is found. It can be learned from FIG. 6 that, the quantity of pilots is gradually increased from 4 to 20, and the signal-to-noise ratio corresponding to the packet error rate of 1% is in a decreasing trend. When the quantity of pilots is increased to 12 to 14, the signal-to-noise ratio corresponding to the packet error rate of 1% on a link tends to be stable. If pilots continue to be added, the signal-to-noise ratio corresponding to the packet error rate of 1% no longer significantly decreases. Therefore, the selected quantity of pilot tones ranges from 12 to 14.

In addition, on the premise that a quantity of data tones and the quantity of pilot tones are comprehensively considered, when the quantity of pilot tones is 10, a requirement for a low packet error rate can also be met.

In conclusion, when the PPDU is carried on the 64 tones, the packet error rate can be low when the value of the quantity of pilot tones is any one of 10, 12, or 14.

It should be understood that the foregoing quantity of pilot tones being any one of 10, 12, or 14 is merely an example, and is not intended to limit the protection scope of this application. In the case shown in Example 1, the quantity of pilot tones may alternatively be another positive integer greater than 4. Examples are not enumerated herein.

Optionally, in the case shown in Example 1, when the quantity of pilot tones is 10, a positive frequency part and a negative frequency part are symmetrical and each includes five pilot tones. For the positive frequency part, in ascending order of index values, an index value of a first pilot tone is in 1:5, an index value of a second pilot tone is in 6:10, an index value of a third pilot tone is in 11:15, an index value of a fourth pilot tone is in 16:20, and an index value of a fifth pilot tone is in 21:25. For the negative frequency part, in descending order of index values, an index value of a first pilot tone is in -5:-1, an index value of a second pilot tone is in - 10:-6, an index value of a third pilot tone is in -15:-11, an index value of a fourth pilot tone is in -20:-16, and an index value of a fifth pilot tone is in -25:-21.

For example, in the case shown in Example 1, when the quantity of pilot tones is 10, index values of the pilot tones may be {-25, -20, -15, -10, -5, 5, 10, 15, 20, 25} or {-24, -19, - 14, -9, -4, 4, 9, 14, 19, 24}.

Optionally, in the case shown in Example 1, when the quantity of pilot tones is 12, a positive frequency part and a negative frequency part are symmetrical and each includes six pilot tones. For the positive frequency part, in ascending order of index values, an index value of a first pilot tone is in 1:4, an index value of a second pilot tone is in 5:8, an index value of a third pilot tone is in 9:12, an index value of a fourth pilot tone is in 13:16, an index value of a fifth pilot tone is in 17:20, and an index value of a sixth pilot tone is in 21:24. For the negative frequency part, in descending order of index values, an index value of a first pilot tone is in -4:-1, an index value of a second pilot tone is in -8:-5, an index value of a third pilot tone is in -12:-9, an index value of a fourth pilot tone is in -16:-13, an index value of a fifth pilot tone is in - 20:-17, and an index value of a sixth pilot tone is in -24:-21.

For example, in the case shown in Example 1, when the quantity of pilot tones is 12, index values of the pilot tones may be {-24, -20, -16, -12, -8, -4, 4, 8, 12, 16, 20, 24}.

Optionally, when the quantity of pilot tones is 14, a positive frequency part and a negative frequency part are symmetrical and each includes seven pilot tones. For the positive frequency part, in ascending order of index values, an index value of a first pilot tone is in 1:4, an index value of a second pilot tone is in 5:8, an index value of a third pilot tone is in 9:12, an index value of a fourth pilot tone is in 13:16, an index value of a fifth pilot tone is in 17:20, an index value of a sixth pilot tone is in 21:24, and an index value of a seventh pilot tone is in 25:28. For the negative frequency part, in descending order of index values, an index value of a first pilot tone is in -4:-1, an index value of a second pilot tone is in -8:-5, an index value of a third pilot tone is in -12:-9, an index value of a fourth pilot tone is in -16:-13, an index value of a fifth pilot tone is in -20:-17, an index value of a sixth pilot tone is in -24:-21, and an index value of a seventh pilot tone is in -28:-25.

For example, in the case shown in Example 1, when the quantity of pilot tones is 14, index values of the pilot tones may be {-27, -23, -19, -15, -11, -7, -3, 3, 7, 11, 15, 19, 23, 27}.

It should be understood that the foregoing index of the pilot tone is merely an example, and does not constitute any limitation on the protection scope of this application. In the case shown in Example 1, the index of the pilot tone may alternatively be another case. Examples are not enumerated herein.

It is stipulated in the protocol that a value of a pilot tone is related to a quantity of pilot tones. Currently, the Wi-Fi protocol provides pilot values respectively corresponding to quantities 2, 4, 6, 8, 16, 24, and 32 of pilot tones.

For example, the quantity of pilot tones is 2, and the pilot value is a first preset value (for example, [1 -1]).

For another example, the quantity of pilot tones is 4, and the pilot value is a second preset value (for example, [1 1 1 -1]).

For another example, the quantity of pilot tones is 6, and the pilot value is a third preset value (for example, [1 1 1 -1 -1 1]).

For another example, the quantity of pilot tones is 8, and the pilot value is a fourth preset value (for example, [1 1 1 -1 -1 1 1 1]).

For another example, the quantity of pilot tones is 16, and the pilot value is a fifth preset value (for example, [1 1 1 -1 -1 1 1 1 1 1 -1 -1 1 1 1]).

For another example, the quantity of pilot tones is 24, and the pilot value is a sixth preset value (for example, [1 1 1 -1 -1 1 1 1 1 1 -1 -1 1 1 1 1 1 1 -1 -1 1 1 1]).

In the case shown in Example 1, for the tone plan of the high frequency band, a pilot value of a pilot tone may be obtained by reusing a pilot value defined in a protocol, or by concatenating pilot values defined in a protocol.

Optionally, when the quantity of pilot tones is 10, in a possible implementation, the pilot value is determined based on the first preset value and the fourth preset value. For example, the pilot value is obtained by concatenating [1, -1] and [1 1 1 -1 -1 1 1 1], and may be [1 -1 1 1 1 -1 -1 1 1 1] or [1 1 1 -1 -1 1 1 1 1 -1].

In another possible implementation, the pilot value is determined based on the second preset value and the third preset value. For example, the pilot value is obtained by concatenating [1 1 1 -1] and [1 1 1 -1 -1 1], and may be [1 1 1 -1 1 1 1 -1 -1 1] or

[1 1 1 -1 -1 1 1 1 1 -1].

Optionally, when the quantity of pilot tones is 12, in a possible implementation, the pilot value is determined based on the second preset value and the fourth preset value. For example, the pilot value is obtained by concatenating [1 1 1 -1] and [1 1 1 -1 -1 1 1 1], and may be [1 1 1 -1 1 1 1 -1 -1 1 1 1] or [1 1 1 -1 -1 1 1 1 1 1 1 -1].

In another possible implementation, the pilot value is determined based on two third preset values. For example, the pilot value is obtained by concatenating [1 1 1 -1 -1 1] and [1 1 1 -1 -1 1], and may be [1 1 1 -1 -1 1 1 1 1 -1 -1 1].

Optionally, when the quantity of pilot tones is 14, the pilot value is determined based on the third preset value and the fourth preset value. For example, the pilot value is obtained by concatenating [1 1 1 -1 -1 1] and [1 1 1 -1 -1 1 1 1], and may be [1 1 1 -1 -1 1 1 1 1 -1 -1 1 1 1] or [1 1 1 -1 -1 1 1 1 1 1 1 -1 -1 1].

It should be understood that the foregoing pilot value of the pilot tone is merely an example, and does not constitute any limitation on the protection scope of this application. In the case shown in Example 1, the pilot value of the pilot tone may alternatively be another case. Examples are not enumerated herein.

Example 2: The PPDU is carried on 128 tones. In other words, the PPDU is carried on a 320 MHz or 640 MHz bandwidth. In other words, the tone plan is a 320 MHz or 640 MHz tone plan

In a case shown in Example 2, the quantity of pilot tones is greater than 6, and the "preset value" may be set to 6 or a positive integer greater than 6.

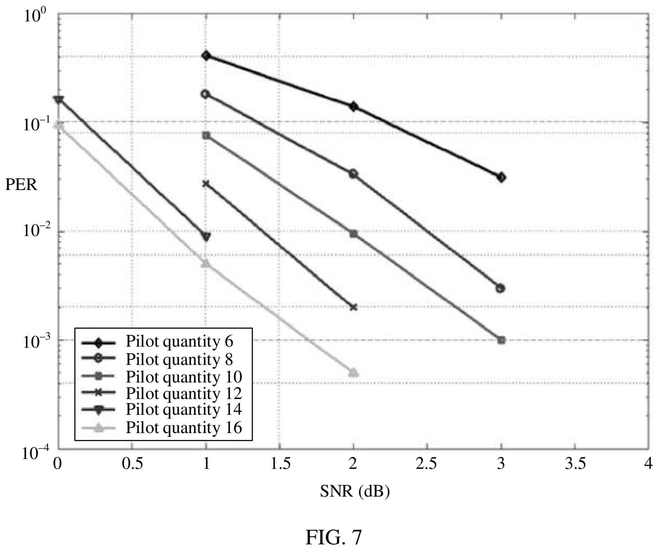

For example, a value that is of the quantity of pilot tones and that is greater than 6 may be 14 or 16. FIG. 7 shows packet error rate performance in a case in which a total quantity of tones is 128 and values of the quantity of pilot tones are 6, 8, 10, 12, 14, and 16.

It can be learned from FIG. 7 that, the quantity of pilots is gradually increased from 6 to 16, and the signal-to-noise ratio corresponding to the packet error rate of 1% is in a decreasing trend. When the quantity of pilots is increased to 14 to 16, the signal-to-noise ratio corresponding to the packet error rate of 1% on a link tends to be stable. If pilots continue to be added, the signal-to-noise ratio corresponding to the packet error rate of 1% no longer significantly decreases. Therefore, the selected quantity of pilot tones is 14 or 16.

In conclusion, when the PPDU is carried on the 128 tones, the packet error rate can be low when the value of the quantity of pilot tones is 14 or 16.

It should be understood that the foregoing quantity 14 or 16 of pilot tones is merely an example, and does not constitute any limitation on the protection scope of this application. In the case shown in Example 2, the quantity of pilot tones may alternatively be another positive integer greater than 6. Examples are not enumerated herein.

Optionally, in the case shown in Example 2, when the quantity of pilot tones is 14, a positive frequency part and a negative frequency part are symmetrical and each includes seven pilot tones. For the positive frequency part, in ascending order of index values, an index value of a first pilot tone is in 2:9, an index value of a second pilot tone is in 10:17, an index value of a third pilot tone is in 18:25, an index value of a fourth pilot tone is in 26:33, an index value of a fifth pilot tone is in 34:41, an index value of a sixth pilot tone is in 42:49, and an index value of a seventh pilot tone is in 50:57. For the negative frequency part, in descending order of index values, an index value of a first pilot tone is in -9:-2, an index value of a second pilot tone is in - 17:-10, an index value of a third pilot tone is in -25:-18, an index value of a fourth pilot tone is in -33:-26, an index value of a fifth pilot tone is in -41:-34, an index value of a sixth pilot tone is in -49:-42, and an index value of a seventh pilot tone is in -57:-50.

For example, in the case shown in Example 2, when the quantity of pilot tones is 14, index values of the pilot tones may be {-53, -45, -37, -29, -21, -13, -5, 5, 13, 21, 29, 37, 45, 53} or {-55, -53, -39, -25, -18, -11, -6, 6, 11, 18, 25, 39, 53, 55}.

Optionally, in the case shown in Example 2, when the quantity of pilot tones is 16, a positive frequency part and a negative frequency part are symmetrical and each includes eight pilot tones. For the positive frequency part, in ascending order of index values, an index value of a first pilot tone is in 2:8, an index value of a second pilot tone is in 9:15, an index value of a third pilot tone is in 16:22, an index value of a fourth pilot tone is in 23:29, an index value of a fifth pilot tone is in 30:36, an index value of a sixth pilot tone is in 37:43, an index value of a seventh pilot tone is in 44:50, and an index value of an eighth pilot tone is in 51:57. For the negative frequency part, in descending order of index values, an index value of a first pilot tone is in -8:-2, an index value of a second pilot tone is in -15:-9, an index value of a third pilot tone is in -22:-16, an index value of a fourth pilot tone is in -29:-23, an index value of a fifth pilot tone is in -36:-30, an index value of a sixth pilot tone is in -43:-37, an index value of a seventh pilot tone is in -50:-44, and an index value of an eighth pilot tone is in -57:-51.

For example, in the case shown in Example 2, when the quantity of pilot tones is 16, index values of the pilot tones may be {-54, -47, -40, -33, -26, -19, -12, -5, 5, 12, 19, 26, 33, 40, 47, 54}.

It should be understood that the foregoing index of the pilot tone is merely an example, and does not constitute any limitation on the protection scope of this application. In the case shown in Example 2, the index of the pilot tone may alternatively be another case. Examples are not enumerated herein.

In the case shown in Example 2, for the tone plan of the high frequency band, a pilot value of a pilot tone may be obtained by reusing a pilot value defined in a protocol, or by concatenating pilot values defined in a protocol. For pilot values defined in the protocol, refer to the descriptions of the pilot values respectively corresponding to the quantities 2, 4, 6, 8, 16, 24, and 32 of pilot tones in Example 1. Details are not described herein again.

Optionally, when the quantity of pilot tones is 14, the pilot value is determined based on the third preset value and the fourth preset value. For example, the pilot value is obtained by concatenating [1 1 1 -1 -1 1] and [1 1 1 -1 -1 1 1 1], and may be [1 1 1 -1 -1 1 1 1 1 -1 -1 1 1 1] or [1 1 1 -1 -1 1 1 1 1 1 1 -1 -1 1].

Optionally, when the quantity of pilot tones is 16, in a possible implementation, the pilot value is determined based on the second preset value and two third preset values. For example, the pilot value is obtained by concatenating [1 1 1 -1], [1 1 1 -1 -1 1], and [1 1 1 -1 -1 1], and may be [1 1 1 -1 1 1 1 -1 -1 1 1 1 1 -1 -1 1] or [1 1 1 -1 -1 1 1 1 1 -1 -1 1 1 1 1 -1].

In another possible implementation, the pilot value is determined based on the first preset value, the third preset value, and the fourth preset value. For example, the pilot value is obtained by concatenating [1 -1], [1 1 1 -1 -1 1], and [1 1 1 -1 -1 1 1 1], and may be [1 -1 1 1 1 -1 -1 1 1 1 1 -1 -1 1 1 1].

It should be understood that the foregoing pilot value of the pilot tone is merely an example, and does not constitute any limitation on the protection scope of this application. In the case shown in Example 2, the pilot value of the pilot tone may alternatively be another case. Examples are not enumerated herein.

Example 3: The PPDU is carried on 256 tones. In other words, the PPDU is carried on a 640 MHz or 1280 MHz bandwidth. The tone plan is a 640 MHz or 1280 MHz tone plan.

In a case shown in Example 3, the quantity of pilot tones is greater than 8, and the "preset value" may be set to 8 or a positive integer greater than 8.

For example, a value that is of the quantity of pilot tones and that is greater than 8 may be any one of 14, 16, or 18. FIG. 8 shows packet error rate performance in a case in which a total quantity of tones is 256 and values of the quantity of pilot tones are 8, 10, 12, 14, 16, and 18.

It can be learned from FIG. 8 that, the quantity of pilots is gradually increased from 4 to 18, and the signal-to-noise ratio corresponding to the packet error rate of 1% is in a decreasing trend. When the quantity of pilots is increased to 16 to 18, the signal-to-noise ratio corresponding to the packet error rate of 1% on a link tends to be stable. If pilots continue to be added, the signal-to-noise ratio corresponding to the packet error rate of 1% no longer significantly decreases. Therefore, the selected quantity of pilot tones ranges from 16 to 18.

In addition, on the premise that a quantity of data tones and the quantity of pilot tones are comprehensively considered, when the quantity of pilot tones is 14, a requirement for a low packet error rate can also be met.

In conclusion, when the PPDU is carried on the 256 tones, the packet error rate can be low when the value of the quantity of pilot tones is any one of 14, 16, or 18.

It should be understood that the foregoing quantity of pilot tones being any one of 14, 16, or 18 is merely an example, and is not intended to limit the protection scope of this application. In the case shown in Example 3, the quantity of pilot tones may alternatively be another positive integer greater than 8. Examples are not enumerated herein.

Optionally, in the case shown in Example 3, when the quantity of pilot tones is 14, a positive frequency part and a negative frequency part are symmetrical and each includes seven pilot tones. For the positive frequency part, in ascending order of index values, an index value of a first pilot tone is in 2:18, an index value of a second pilot tone is in 19:35, an index value of a third pilot tone is in 36:52, an index value of a fourth pilot tone is in 53:69, an index value of a fifth pilot tone is in 70:86, an index value of a sixth pilot tone is in 87:103, and an index value of a seventh pilot tone is in 104:121. For the negative frequency part, in descending order of index values, an index value of a first pilot tone is in -18:-2, an index value of a second pilot tone is in -35:-19, an index value of a third pilot tone is in -52:-36, an index value of a fourth pilot tone is in -69:-53, an index value of a fifth pilot tone is in -86:-70, an index value of a sixth pilot tone is in -103:-87, and an index value of a seventh pilot tone is in -121:-104.

For example, in the case shown in Example 3, when the quantity of pilot tones is 14, index values of the pilot tones may be {-112, -95, -78, -61, -44, -27, -10, 10, 27, 44, 61, 78, 95, 112}.

Optionally, in the case shown in Example 3, when the quantity of pilot tones is 16, a positive frequency part and a negative frequency part are symmetrical and each includes eight pilot tones. For the positive frequency part, in ascending order of index values, an index value of a first pilot tone is in 2:16, an index value of a second pilot tone is in 17:31, an index value of a third pilot tone is in 32:46, an index value of a fourth pilot tone is in 47:61, an index value of a fifth pilot tone is in 62:76, an index value of a sixth pilot tone is in 77:91, an index value of a seventh pilot tone is in 92:106, and an index value of an eighth pilot tone is in 107:121. For the negative frequency part, in descending order of index values, an index value of a first pilot tone is in -16:-2, an index value of a second pilot tone is in -31:-17, an index value of a third pilot tone is in -46:-32, an index value of a fourth pilot tone is in -61:-47, an index value of a fifth pilot tone is in -76:-62, an index value of a sixth pilot tone is in -91:-77, an index value of a seventh pilot tone is in -106:-92, and an index value of an eighth pilot tone is in -121:-107.

For example, in the case shown in Example 3, when the quantity of pilot tones is 16, index values of the pilot tones may be {-114, -99, -84, -69, -54, -39, -24, -9, 9, 24, 39, 54, 69, 84, 99, 114}.

Optionally, in the case shown in Example 3, when the quantity of pilot tones is 18, a positive frequency part and a negative frequency part are symmetrical and each includes nine pilot tones. For the positive frequency part, in ascending order of index values, an index value of a first pilot tone is in 2:14, an index value of a second pilot tone is in 15:27, an index value of a third pilot tone is in 28:40, an index value of a fourth pilot tone is in 41:53, an index value of a fifth pilot tone is in 54:66, an index value of a sixth pilot tone is in 67:79, an index value of a seventh pilot tone is in 80:92, an index value of an eighth pilot tone is in 93:105, and an index value of a ninth pilot tone is in 106:118. For the negative frequency part, in descending order of index values, an index value of a first pilot tone is in -14:-2, an index value of a second pilot tone is in -27:-15, an index value of a third pilot tone is in -40:-28, an index value of a fourth pilot tone is in -53:-41, an index value of a fifth pilot tone is in -66:-54, an index value of a sixth pilot tone is in -79:-67, an index value of a seventh pilot tone is in -92:-80, an index value of an eighth pilot tone is in -105:-93, and an index value of a ninth pilot tone is in -118:-106.

For example, in the case shown in Example 3, when the quantity of pilot tones is 18, index values of the pilot tones may be {-112, -99, -86, -73, -60, -47, -34, -21, -8, 8, 21, 34, 47, 60, 73, 86, 99, 112}.

It should be understood that the foregoing index of the pilot tone is merely an example, and does not constitute any limitation on the protection scope of this application. In the case shown in Example 3, the index of the pilot tone may alternatively be another case. Examples are not enumerated herein.

In the case shown in Example 3, for the tone plan of the high frequency band, a pilot value of a pilot tone may be obtained by reusing a pilot value defined in a protocol, or by concatenating pilot values defined in a protocol. For pilot values defined in the protocol, refer to the descriptions of the pilot values respectively corresponding to the quantities 2, 4, 6, 8, 16, 24, and 32 of pilot tones in Example 1. Details are not described herein again.

Optionally, when the quantity of pilot tones is 14, the pilot value is determined based on the third preset value and the fourth preset value. For example, the pilot value is obtained by concatenating [1 1 1 -1 -1 1] and [1 1 1 -1 -1 1 1 1], and may be [1 1 1 -1 -1 1 1 1 1 -1 -1 1 1 1] or [1 1 1 -1 -1 1 1 1 1 1 1 -1 -1 1].

Optionally, when the quantity of pilot tones is 16, in a possible implementation, the pilot value is determined based on the second preset value and two third preset values. For example, the pilot value is obtained by concatenating [1 1 1 -1], [1 1 1 -1 -1 1], and [1 1 1 -1 -1 1], and may be [1 1 1 -1 1 1 1 -1 -1 1 1 1 1 -1 -1 1] or [1 1 1 -1 -1 1 1 1 1 -1 -1 1 1 1 1 -1].

In another possible implementation, the pilot value is determined based on the first preset value, the third preset value, and the fourth preset value. For example, the pilot value is obtained by concatenating [1 -1], [1 1 1 -1 -1 1], and [1 1 1 -1 -1 1 1 1], and may be [1 -1 1 1 1 -1 -1 1 1 1 1 -1 -1 1 1 1].

Optionally, when the quantity of pilot tones is 18, in a possible implementation, the pilot value is determined based on the second preset value, the third preset value, and the fourth preset value. For example, the pilot value is obtained by concatenating [1 1 1 -1], [1 1 1 -1 -1 1], and [1 1 1 -1 -1 1 1 1], and may be [1 1 1 -1 1 1 1 -1 -1 1 1 1 1 -1 -1 1 1 1].

In another possible implementation, the pilot value is determined based on the first preset value and the fifth preset value. For example, the pilot value is obtained by concatenating [1 -1] and [1 1 1 -1 -1 1 1 1 1 1 1 -1 -1 1 1 1], and may be [1 -1 1 1 1 -1 -1 1 1 1 1 1 1 -1 -1 1 1 1].

It should be understood that the foregoing pilot value of the pilot tone is merely an example, and does not constitute any limitation on the protection scope of this application. In the case shown in Example 3, the pilot value of the pilot tone may alternatively be another case. Examples are not enumerated herein.

Example 4: The PPDU is carried on 512 tones. In other words, the PPDU is carried on a 1280 MHz or 2560 MHz bandwidth. The tone plan is a 1280 MHz or 2560 MHz tone plan.

In a case shown in Example 4, the quantity of pilot tones is greater than 16, and the "preset value" may be set to 16 or a positive integer greater than 16.

For example, a value that is of the quantity of pilot tones and that is greater than 16 may be 24. When the PPDU is carried on the 512 tones, the packet error rate can be low when the value of the quantity of pilot tones is 24.

It should be understood that the foregoing quantity 24 of pilot tones is merely an example, and does not constitute any limitation on the protection scope of this application. In the case shown in Example 4, the quantity of pilot tones may alternatively be another positive integer greater than 16. Examples are not enumerated herein.

Optionally, in the case shown in Example 4, when the quantity of pilot tones is 24, a positive frequency part and a negative frequency part are symmetrical and each includes 12 pilot tones. For the positive frequency part, in ascending order of index values, an index value of a first pilot tone is in 2:21, an index value of a second pilot tone is in 22:41, an index value of a third pilot tone is in 42:61, an index value of a fourth pilot tone is in 62:81, an index value of a fifth pilot tone is in 82:101, an index value of a sixth pilot tone is in 102:121, an index value of a seventh pilot tone is in 122:141, an index value of an eighth pilot tone is in 142:161, an index value of a ninth pilot tone is in 162:181, an index value of a 10th pilot tone is in 182:201, an index value of an 11th pilot tone is in 202:221, and an index value of a 12th pilot tone is in 222:241. For the negative frequency part, in descending order of index values, an index value of a first pilot tone is in -21:-2, an index value of a second pilot tone is in -41:-22, an index value of a third pilot tone is in -61:-42, an index value of a fourth pilot tone is in -81:-62, an index value of a fifth pilot tone is in -101:-82, an index value of a sixth pilot tone is in -121:-102, an index value of a seventh pilot tone is in -141:-122, an index value of an eighth pilot tone is in -161:-142, and an index value of a ninth pilot tone is in -181:-162.

For example, in the case shown in Example 4, when the quantity of pilot tones is 24, index values of the pilot tones may be {-231, -211, -191, -171, -151, -131, -111, -91, -71, -51, -31, -11, 11, 31, 51, 71, 91, 111, 131, 151, 171, 191, 211, 231}.

It should be understood that the foregoing index of the pilot tone is merely an example, and does not constitute any limitation on the protection scope of this application. In the case shown in Example 4, the index of the pilot tone may alternatively be another case. Examples are not enumerated herein.

In the case shown in Example 4, for the tone plan of the high frequency band, a pilot value of a pilot tone may be obtained by reusing a pilot value defined in a protocol, or by concatenating pilot values defined in a protocol. For pilot values defined in the protocol, refer to the descriptions of the pilot values respectively corresponding to the quantities 2, 4, 6, 8, 16, 24, and 32 of pilot tones in Example 1. Details are not described herein again.

Optionally, when the quantity of pilot tones is 24, the pilot value may be obtained by reusing pilot values [1 1 1 -1 -1 1 1 1 1 1 1 -1 -1 1 1 1 1 1 1 -1 -1 1 1 1] corresponding to 24 pilot tones defined in the protocol.

It should be understood that the foregoing pilot value of the pilot tone is merely an example, and does not constitute any limitation on the protection scope of this application. In the case shown in Example 4, the pilot value of the pilot tone may alternatively be another case.

For example, the quantity of pilot tones is 20.

In a possible implementation, the pilot value is determined based on the second preset value and the fifth preset value. For example, the pilot value is obtained by concatenating [1 1 1 -1] and [1 1 1 -1 -1 1 1 1 1 1 1 -1 -1 1 1 1], and may be [1 1 1 -1 1 1 1 -1 -1 1 1 1 1 1 1 -1 -1 1 1 1] or [1 1 1 -1 -1 1 1 1 1 1 1 -1 -1 1 1 1 1 1 1 -1].

For another example, the quantity of pilot tones is 26.

In a possible implementation, the pilot value is determined based on the first preset value and the sixth preset value. For example, the pilot value is obtained by concatenating [1, -1] and [1 1 1 -1 -1 1 1 1 1 1 -1 -1 1 1 1], and may be [1 1 1 -1 1 1 1 -1 -1 1 1 1 1 1 -1 -1 1 1 1] or [1 1 1 -1 -1 1 1 1 1 1 -1 -1 1 1 1 1 1 -1].

For another example, the quantity of pilot tones is 28.

In a possible implementation, the pilot value is determined based on the second preset value and the sixth preset value. For example, the pilot value is obtained by concatenating [1 1 1 -1] and [1 1 1 -1 -1 1 1 1 1 1 -1 -1 1 1 1], and may be: [1 1 1 -1 1 1 1 -1 -1 1 1 1 1 1 -1 -1 1 1 1] or [1 1 1 -1 -1 1 1 1 1 1 1 -1 -1 1 1 1 1 1 1 1 -1].

For another example, the quantity of pilot tones is 30.

In a possible implementation, the pilot value is determined based on the third preset value and the sixth preset value. For example, the pilot value is obtained by concatenating [1 1 1 -1 -1 1] and [1 1 1 -1 -1 1 1 1 1 1 -1 -1 1 1 1], and may be [1 1 1 -1 1 1 1 -1 -1 1 1 1 1 1 - 1 -1 1 1 1] or [1 1 1 -1 -1 1 1 1 1 1 1 -1 -1 1 1 1 1 1 -1].

It should be understood that the foregoing manner of concatenating different pilot values to obtain a new pilot value is merely an example, and does not constitute any limitation on the protection scope of this application. Alternatively, concatenation may be performed in another manner. In this application, it is only limited that a new pilot value is determined based on different pilot values. A specific determining manner is not limited, and examples are not enumerated herein.

In the embodiment shown in FIG. 5, the tone plan may be designed for the high frequency band, to reduce the packet error rate.

This application further provides a communication method, and a tone mapper is designed for a high frequency band. The following describes the communication method in detail with reference to FIG. 9.

FIG. 9 is a schematic flowchart of another communication method according to an embodiment of this application. The method includes the following steps.

S910: Input high-frequency constellation mapping symbols into a tone mapper.

In this embodiment, the high-frequency constellation mapping symbol may be a symbol obtained by performing constellation mapping on a QAM symbol or another modulation symbol. A type of a modulation symbol input into the tone mapper is not limited in this embodiment.

The high-frequency constellation mapping symbol may be understood as a constellation mapping symbol obtained in a process of generating an OFDM symbol in a high frequency band scenario. In this application, the high frequency band may be understood as a high frequency band defined in a protocol standard (for example, 802.11aj/ay) for the high frequency band, including but not limited to one or more of 45 GHz/60 GHz.

S920: Reorder the high-frequency constellation mapping symbols.

Reordering is performed on the high-frequency constellation mapping symbols based on the tone mapper.

For example, the high-frequency constellation mapping symbols are used for single-user transmission.

In this embodiment, the tone mapper may be a tone mapper independently designed for a high frequency band, or may reuse a tone mapper defined in an existing protocol (for example, the tone mapper is formed by concatenating defined tone mappers). The following describes a possible form of the tone mapper in this embodiment with reference to Manner 1 and Manner 2.

Manner 1: The tone mapper is designed for the high frequency band. The tone mapper includes a tone mapper, a quantity of data tones of the tone mapper is $N_{SD}$, a tone mapping distance parameter $D_{TM}$ of the tone mapper is a common divisor of $N_{SD}$, and $N_{SD}$ is the quantity of data tones.

Manner 1.1: A total quantity of tones is 64, $N_{SD}$ is less than 52, and a tone mapping distance parameter $D_{TM}$ of the tone mapper is 3 or 4. For example, if the total quantity of tones is 64, $N_{SD}$ is 44, and the tone mapping distance parameter $D_{TM}$ of the tone mapper is 4; or

$N_{SD}$ is 42, and the tone mapping distance parameter $D_{TM}$ of the tone mapper is 3; or
$N_{SD}$ is 42, and the tone mapping distance parameter $D_{TM}$ of the tone mapper is 3; or
$N_{SD}$ is 40, and the tone mapping distance parameter $D_{TM}$ of the tone mapper is 4.

In the case shown in Manner 1.1, the communication method shown in FIG. 9 may be used in combination with the communication method shown in FIG. 5 described above, to obtain a proper quantity of pilot tones and a proper tone mapper that are designed for the high frequency band. This includes but is not limited to the following several possible implementations.

In a possible implementation, the quantity of pilot tones is 12, and the quantity of data tones is 44. Because $44=4\times11$, the tone mapping distance parameter $D_{TM}$ of the tone mapper is selected as 4 based on a bandwidth size. A quantity of direct current tones is 1, and an index value is 0. A quantity of guard tones is 7, and index values are [-32:-29, 29:31].

In another possible implementation, the quantity of pilot tones is 14, and the quantity of data tones is 42. Because $42=2\times3\times7$, the tone mapping distance parameter $D_{TM}$ of the tone mapper is selected as 3 based on a bandwidth size. A quantity of direct current tones is 1, and an index value is 0. A quantity of guard tones is 7, and index values are [-32:-29, 29:31].

In still another possible implementation, the quantity of pilot tones is 12, and the quantity of data tones is 42. Because 42=2×3×7, the tone mapping distance parameter $D_{TM}$ of the tone mapper is selected as 3 based on a bandwidth size. A quantity of direct current tones is 3, and index values are [-1:1]. A quantity of guard tones is 7, and index values are [-32:-29, 29:31].

In still another possible implementation, the quantity of pilot tones is 14, and the quantity of data tones is 40. Because 42=2×2×2×5, the tone mapping distance parameter $D_{TM}$ of the tone mapper is selected as 4 based on a bandwidth size. A quantity of direct current tones is 3, and index values are [-1:1]. A quantity of guard tones is 7, and index values are [-32:-29, 29:31].

Manner 1.2: A total quantity of tones is 128, $N_{SD}$ is less than 108, and a tone mapping distance parameter $D_{TM}$ of the tone mapper is 5 or 7. For example, $N_{SD}$ is 100, and a tone mapping distance parameter $D_{TM}$ of the first tone mapper is 5; or $N_{SD}$ is 98, and a tone mapping distance parameter $D_{TM}$ of the first tone mapper is 7.

In the case shown in Manner 1.2, the communication method shown in FIG. 9 may be used in combination with the communication method shown in FIG. 5 described above, to obtain a proper quantity of pilot tones and a proper tone mapper that are designed for the high frequency band. This includes but is not limited to the following several possible implementations.

In a possible implementation, the quantity of pilot tones is 14, and the quantity of data tones is 100. Because 100=2×2×5×5, the tone mapping distance parameter $D_{TM}$ of the tone mapper is selected as 5 based on a bandwidth size. A quantity of direct current tones is 3, and index values are [-1:1]. A quantity of guard tones is 11, and index values are [-64:-59, 59:63].

In another possible implementation, the quantity of pilot tones is 16, and the quantity of data tones is 98. Because 98=2×7×7, the tone mapping distance parameter $D_{TM}$ of the tone mapper is selected as 7 based on a bandwidth size. A quantity of direct current tones is 3, and index values are [-1:1]. A quantity of guard tones is 11, and index values are [-64:-59, 59:63].

Manner 1.3: A total quantity of tones is 256, $N_{SD}$ is less than 234, and a tone mapping distance parameter $D_{TM}$ of the tone mapper is 2 or 8. For example, $N_{SD}$ is 226, and a tone mapping distance parameter $D_{TM}$ of the first tone mapper is 2; or $N_{SD}$ is 224, and a tone mapping distance parameter $D_{TM}$ of the first tone mapper is 8.

In the case shown in Manner 1.3, the communication method shown in FIG. 9 may be used in combination with the communication method shown in FIG. 5 described above, to obtain a proper quantity of pilot tones and a proper tone mapper that are designed for the high frequency band. This includes but is not limited to the following several possible implementations.

In a possible implementation, the quantity of pilot tones is 16, and the quantity of data tones is 226. Because 226=2×113, the tone mapping distance parameter $D_{TM}$ of the tone mapper is selected as 2 based on a bandwidth size. A quantity of direct current tones is 3, and index values are [-1:1]. A quantity of guard tones is 11, and index values are [-128:-123, 123:127].

In another possible implementation, the quantity of pilot tones is 18, and the quantity of data tones is 224. Because 224=2×2×7×8, the tone mapping distance parameter $D_{TM}$ of the tone mapper is selected as 8 based on a bandwidth size. A quantity of direct current tones is 3, and index values are [-1:1]. A quantity of guard tones is 11, and index values are [-128:-123, 123:127].

Manner 2: An existing tone mapper in the Wi-Fi system is reused. The tone mapper includes at least one tone mapper, and the at least one tone mapper is at least one tone mapper in a preset tone mapper set. The preset tone mapper set may be understood as an existing tone mapper in the Wi-Fi system.

For example, in this embodiment, that the tone mapper reuses the tone mapper specified in the existing protocol includes the following several possible implementations.

Manner 2.1: The tone mapper includes a first tone mapper, a quantity of data tones of the first tone mapper is M, a total quantity of data tones is N, N is greater than M, and N and M are positive integers; and high-frequency constellation mapping symbols carried on the M data tones (for example, the first M data tones or any M data tones) of the N data tones are reordered based on the first tone mapper, and high-frequency constellation mapping symbols carried on remaining N-M data tones (for example, last N-M data tones) of the N data tones are not reordered.

For example, the total quantity of tones is 64. A value of the total quantity N of data tones includes 46, 44, or 42, a tone mapping distance parameter $D_{TM}$ of the first tone mapper is 3, and the quantity of data tones of the first tone mapper is 36; the first tone mapper is a tone mapper, applicable to a first multi-resource unit (for example, a 52+26-tone MRU) using a dual-carrier modulation mode, in the tone mapper set, the first multi-resource unit includes a first resource unit and a second resource unit, the first resource unit includes 26 tones, and the second resource unit includes 52 tones; and high-frequency constellation mapping symbols carried on the 36 data tones (for example, first 36 data tones) of the N data tones are reordered based on the first tone mapper, and high-frequency constellation mapping symbols carried on remaining N-36 data tones (for example, last N-36 data tones) of the N data tones are not reordered.

In the case shown in Manner 2.1 in which the total quantity of tones is 64, the communication method shown in FIG. 9 may be used in combination with the communication method shown in FIG. 5 described above, to obtain a proper quantity of pilot tones and a proper tone mapper that are designed for the high frequency band. This includes but is not limited to the following several possible implementations.

In a possible implementation, the quantity of pilot tones is 10, the total quantity of data tones is 46, a tone mapping distance parameter $D_{TM}$ of the first tone mapper is 3, and the quantity of data tones of the first tone mapper is 36. High-frequency constellation mapping symbols carried on the 36 data tones of the data tones are reordered based on the first tone mapper, and high-frequency constellation mapping symbols carried on the remaining 10 data tones of the data tones are not reordered.

In another possible implementation, the quantity of pilot tones is 12, the total quantity of data tones is 44, a tone mapping distance parameter $D_{TM}$ of the first tone mapper is 3, and the quantity of data tones of the first tone mapper is 36. High-frequency constellation mapping symbols carried on the 36 data tones of the data tones are reordered based on the first tone mapper, and high-frequency constellation mapping symbols carried on the remaining eight data tones of the data tones are not reordered.

In still another possible implementation, the quantity of pilot tones is 14, the total quantity of data tones is 42, a tone mapping distance parameter $D_{TM}$ of the first tone mapper is 3, and the quantity of data tones of the first tone mapper is 36. High-frequency constellation mapping symbols carried on the 36 data tones of the data tones are reordered based on the first tone mapper, and high-frequency constellation mapping symbols carried on the remaining 6 data tones of the data tones are not reordered.

In still another possible implementation, the quantity of pilot tones is 12, the total quantity of data tones is 42, a tone mapping distance parameter $D_{TM}$ of the first tone mapper is 3, and the quantity of data tones of the first tone mapper is 36. High-frequency constellation mapping symbols carried on the 36 data tones of the data tones are reordered based on the first tone mapper, and high-frequency constellation mapping symbols carried on the remaining 6 data tones of the data tones are not reordered.

In still another possible implementation, a quantity of first pilot tones is 14, a total quantity of first data tones is 40, a tone mapping distance parameter $D_{TM}$ of the first tone mapper is 3, and the quantity of data tones of the first tone mapper is 36. High-frequency constellation mapping symbols carried on the 36 data tones of the data tones are reordered based on the first tone mapper, and high-frequency constellation mapping symbols carried on the remaining four data tones of the data tones are not reordered.

It should be understood that the foregoing uses only an example in which the total quantity of tones is 64 for description. When the total quantity of tones is 128, 256, or 512, the first tone mapper may also reuse a tone mapper specified in the existing protocol. High-frequency constellation mapping symbols carried on some data tones of the data tones may be reordered based on the tone mapper specified in the existing protocol, and high-frequency constellation mapping symbols carried on remaining parts of the data tones do not participate in reordering performed based on the tone mapper.

Manner 2.2: The tone mapper includes a first tone mapper, a quantity of data tones of the first tone mapper is M, a total quantity of data tones is N, N is greater than M, and N and M are positive integers; and high-frequency constellation mapping symbols carried on the M data tones (for example, first M data tones) of the N data tones are reordered based on the first tone mapper, to obtain reordered N data tones, and high-frequency constellation mapping symbols carried on M data tones (for example, last M data tones) of the reordered N data tones are reordered based on the first tone mapper.

For example, the total quantity of tones is 64. A value of the total quantity N of data tones includes 46, 44, or 42, a tone mapping distance parameter $D_{TM}$ of the first tone mapper is 3, and the quantity of data tones of the first tone mapper is 36; the first tone mapper is a tone mapper, applicable to a first multi-resource unit using a dual-carrier modulation mode, in the tone mapper set, the first multi-resource unit includes a first resource unit and a second resource unit, the first resource unit includes 26 tones, and the second resource unit includes 52 tones; and high-frequency constellation mapping symbols carried on the 36 data tones of the N data tones are reordered based on the first tone mapper, to obtain reordered N data tones, and high-frequency constellation mapping symbols carried on 36 data tones of the reordered N data tones are reordered based on the first tone mapper.

In the case shown in Manner 2.2 in which the total quantity of tones is 64, the communication method shown in FIG. 9 may be used in combination with the communication method shown in FIG. 5 described above, to obtain a proper quantity of pilot tones and a proper tone mapper that are designed for the high frequency band. This includes but is not limited to the following several possible implementations.

In a possible implementation, the quantity of pilot tones is 10, the total quantity of data tones is 46, a tone mapping distance parameter $D_{TM}$ of the first tone mapper is 3, and the quantity of data tones of the first tone mapper is 36. High-frequency constellation mapping symbols carried on the 36 data tones of the data tones are reordered based on the first tone mapper, to obtain reordered 46 data tones, and high-frequency constellation mapping symbols carried on 36 data tones of the reordered 46 data tones are reordered based on the first tone mapper.

In another possible implementation, the quantity of pilot tones is 12, the total quantity of data tones is 44, a tone mapping distance parameter $D_{TM}$ of the first tone mapper is 3, and the quantity of data tones of the first tone mapper is 36.

High-frequency constellation mapping symbols carried on the 36 data tones of the data tones are reordered based on the first tone mapper, to obtain reordered 44 data tones, and high-frequency constellation mapping symbols carried on 36 data tones of the reordered 44 data tones are reordered based on the first tone mapper.

In still another possible implementation, the quantity of pilot tones is 14, the total quantity of data tones is 42, a tone mapping distance parameter $D_{TM}$ of the first tone mapper is 3, and the quantity of data tones of the first tone mapper is 36. High-frequency constellation mapping symbols carried on the 36 data tones of the data tones are reordered based on the first tone mapper, to obtain reordered 42 data tones, and high-frequency constellation mapping symbols carried on 36 data tones of the reordered 42 data tones are reordered based on the first tone mapper.

In still another possible implementation, the quantity of pilot tones is 12, the total quantity of data tones is 42, a tone mapping distance parameter $D_{TM}$ of the first tone mapper is 3, and the quantity of data tones of the first tone mapper is 36. High-frequency constellation mapping symbols carried on the 36 data tones of the data tones are reordered based on the first tone mapper, to obtain reordered 42 data tones, and high-frequency constellation mapping symbols carried on 36 data tones of the reordered 42 data tones are reordered based on the first tone mapper.

In still another possible implementation, the quantity of pilot tones is 14, the total quantity of data tones is 40, a tone mapping distance parameter $D_{TM}$ of the first tone mapper is 3, and the quantity of data tones of the first tone mapper is 36. High-frequency constellation mapping symbols carried on the 36 data tones of the data tones are reordered based on the first tone mapper, to obtain reordered 40 data tones, and high-frequency constellation mapping symbols carried on 36 data tones of the reordered 40 data tones are reordered based on the first tone mapper.

It should be understood that the foregoing uses only an example in which the total quantity of tones is 64 for description. When the total quantity of tones is 128, 256, or 512, the first tone mapper may also reuse a tone mapper specified in the existing protocol. High-frequency constellation mapping symbols carried on some data tones of the data tones may be reordered based on the tone mapper specified in the existing protocol. After the high-frequency constellation mapping symbols carried on the some data tones are reordered, high-frequency constellation mapping symbols carried on some data tones of reordered data tones participate again in reordering performed based on the tone mapper.

Manner 2.3: The tone mapper includes a plurality of tone mappers, and a sum of quantities of data tones of the plurality of tone mappers is equal to a total quantity of data tones; and the total quantity of data tones is divided into a plurality of parts, high-frequency constellation mapping symbols carried on the plurality of parts are separately reordered based on the plurality of tone mappers, and the plurality of parts are in a one-to-one correspondence with the plurality of tone mappers.

For example, the total quantity of tones is 128, N is 100, the tone mapper includes a second tone mapper and a third tone mapper, a tone mapping distance parameter $D_{TM}$ of the second tone mapper is 3, a quantity of data tones of the second tone mapper is 48, a tone mapping distance parameter $D_{TM}$ of the third tone mapper is 4, and a quantity of data tones of the third tone mapper is 52; the second tone mapper is a tone mapper applicable to a second resource unit (for example, a 52-tone RU) in the tone mapper set, the second resource unit includes 52 tones, the third tone mapper is a tone mapper applicable to a 20 M bandwidth signal in the tone mapper set, and a tone spacing corresponding to the 20 M bandwidth signal is 312.5 kHz; and high-frequency constellation mapping symbols carried on the 48 data tones (for example, first 48 data tones) of the 100 data tones are reordered based on the second tone mapper, and high-frequency constellation mapping symbols carried on the 52 data tones (for example, last 52 data tones) of the 100 data tones are reordered based on the third tone mapper.

It should be noted that, when a low-frequency baseband (an 11ac 160 M bandwidth signal) is reused, segment parsing (segment parser) and segment deparsing (segment deparser) operations need to be skipped.

In the case shown in Manner 2.3 in which the total quantity of tones is 128, the communication method shown in FIG. 9 may be used in combination with the communication method shown in FIG. 5 described above, to obtain a proper quantity of pilot tones and a proper tone mapper that are designed for the high frequency band. This includes:

The quantity of pilot tones is 14, the total quantity of data tones is 100, high-frequency constellation mapping symbols carried on the 48 data tones of the data tones are reordered based on the second tone mapper, and high-frequency constellation mapping symbols carried on the 52 data tones of the 100 data tones are reordered based on the third tone mapper.

For example, the total quantity of tones is 256, N is 228, the tone mapper includes a fourth tone mapper and a fifth tone mapper, a tone mapping distance parameter $D_{TM}$ of the fourth tone mapper is 6, a quantity of data tones of the fourth tone mapper is 126, a tone mapping distance parameter $D_{TM}$ of the fifth tone mapper is 6, and a quantity of data tones of the fifth tone mapper is 102; the fourth tone mapper is a tone mapper (for example, a tone mapper applicable to a 106+26-tone RU) applicable to a second multi-resource unit in the tone mapper set, the second multi-resource unit includes a third resource unit and a first resource unit, the first resource unit includes 26 tones, the third resource unit includes 106 tones, and the fifth tone mapper is a tone mapper (for example, a tone mapper applicable to a 106-tone RU) applicable to the third resource unit in the tone mapper set; and high-frequency constellation mapping symbols carried on the 126 data tones (for example, the first 126 data tones) of the 228 data tones are reordered based on the fourth tone mapper, and high-frequency constellation mapping symbols carried on the remaining 102 data tones of the 228 data tones are reordered based on the fifth tone mapper.

For example, the total quantity of tones is 256, N is 226, the tone mapper includes a fourth tone mapper, a second tone mapper, and a third tone mapper, a tone mapping distance parameter $D_{TM}$ of the fourth tone mapper is 6, a quantity of data tones of the fourth tone mapper is 126, a tone mapping distance parameter $D_{TM}$ of the second tone mapper is 3, a quantity of data tones of the second tone mapper is 48, a tone mapping distance parameter $D_{TM}$ of the third tone mapper is 4, and a quantity of data tones of the third tone mapper is 52; and

the fourth tone mapper is a tone mapper applicable to a second multi-resource unit in the tone mapper set, the second multi-resource unit includes a third resource unit and a first resource unit, the first resource unit includes 26 tones, the third resource unit includes 106 tones, the second tone mapper is a tone mapper applicable to the second resource unit in the tone mapper set, the second resource unit includes 52 tones, the third tone mapper is a tone mapper applicable to a 20 M bandwidth signal in the tone mapper set, and a tone spacing corresponding to the 20 M bandwidth signal is 312.5 kHz; and high-frequency constellation mapping symbols carried on the 126 data tones (for example, the first 126 data tones) of the 226 data tones are reordered based on the fourth tone mapper, high-frequency constellation mapping symbols carried on the 48 data tones (for example, the $127^{th}$ to $174^{th}$ data tones) of data tones other than the 126 data tones of the 226 data tones are reordered based on the second tone mapper, and high-frequency constellation mapping symbols carried on the remaining 52 data tones (for example, the $175^{th}$ to $226^{th}$ data tones) of the 226 data tones are reordered based on the third tone mapper.

In the case shown in Manner 2.3 in which the total quantity of tones is 256, the communication method shown in FIG. 9 may be used in combination with the communication method shown in FIG. 5 described above, to obtain a proper quantity of pilot tones and a proper tone mapper that are designed for the high frequency band. This includes but is not limited to the following several possible implementations.

In a possible implementation, the quantity of pilot tones is 14, the total quantity of data tones is 228, high-frequency constellation mapping symbols carried on the first 48 data tones of the data tones are reordered based on the second tone mapper, high-frequency constellation mapping symbols carried on the 126 data tones of the 228 data tones are reordered based on the fourth tone mapper, and high-frequency constellation mapping symbols carried on the remaining 102 data tones of the 228 data tones are reordered based on the fifth tone mapper.

In another possible implementation, the quantity of pilot tones is 16, the total quantity of data tones is 226, high-frequency constellation mapping symbols carried on the 126 data tones (for example, the first 126 data tones) of the 226 data tones are reordered based on the fourth tone mapper, high-frequency constellation mapping symbols carried on the 48 data tones (for example, the $127^{th}$ to $174^{th}$ data tones) of data tones other than the 126 data tones of the 226 data tones are reordered based on the second tone mapper, and high-frequency constellation mapping symbols carried on the remaining 52 data tones (for example, the $175^{th}$ to $226^{th}$ data tones) of the 226 data tones are reordered based on the third tone mapper.

For example, the total quantity of tones is 512, N is 474, the tone mapper includes a sixth tone mapper, a seventh tone mapper, and an eighth tone mapper, a tone mapping distance parameter $D_{TM}$ of the sixth tone mapper is 9, a quantity of data tones of the sixth tone mapper is 351, a tone mapping distance parameter $D_{TM}$ of the seventh tone mapper is 4, a quantity of data tones of the seventh tone mapper is 72, a tone mapping distance parameter $D_{TM}$ of the eighth tone mapper is 3, and a quantity of data tones of the eighth tone mapper is 51; and

the sixth tone mapper is a tone mapper applicable to a third multi-resource unit in the tone mapper set, the third multi-resource unit includes a fourth resource unit and a fifth resource unit, the fourth resource unit includes 484 tones, the fifth resource unit include 242 tones, the seventh tone mapper is a tone mapper applicable to a first multi-resource unit in the tone mapper set, the first multi-resource unit includes a first resource unit and a second resource unit, the first resource unit includes 26 tones, the second resource unit includes 52 tones, the eighth tone mapper is a tone mapper applicable to a third resource unit in the tone mapper set, and the third resource unit includes 106 tones; and high-frequency constellation mapping symbols carried on the 351 data tones (for example, the first 351 data tones) of the 474 data tones are reordered based on the sixth tone mapper, high-frequency constellation mapping symbols carried on the 72 data tones (for example, the $352^{nd}$ to $423^{rd}$ data tones) of data tones other than the 351 data tones of the 474 data tones are reordered based on the seventh tone mapper, and high-frequency constellation mapping symbols carried on the remaining 51 data tones (for example, the $424^{th}$ to $474^{th}$ data tones) of the 474 data tones are reordered based on the eighth tone mapper.

In the case shown in Manner 2.3 in which the total quantity of tones is 512, the communication method shown in FIG. 9 may be used in combination with the communication method shown in FIG. 5 described above, to obtain a proper quantity of pilot tones and a proper tone mapper that are designed for the high frequency band. This includes:

The quantity of pilot tones is 24, the total quantity of data tones is 474, high-frequency constellation mapping symbols carried on the 351 data tones (for example, the first 351 data tones) of the 474 data tones are reordered based on the sixth tone mapper, high-frequency constellation mapping symbols carried on the 72 data tones (for example, the $352^{nd}$ to $423^{rd}$ data tones) of data tones other than the 351 data tones of the 474 data tones are reordered based on the seventh tone mapper, and high-frequency constellation mapping symbols carried on the remaining 51 data tones (for example, the $424^{th}$ to $474^{th}$ data tones) of the 474 data tones are reordered based on the eighth tone mapper.

In the communication method shown in FIG. 9, for communication transmission in a high frequency band scenario, a proper tone mapper may be designed, and constellation mapping symbols are reordered based on the tone mapper. In addition, the tone mapper may be determined by at least one tone mapper in the tone mapper set defined in the existing protocol, and no separate design is required. This simplifies implementation.

This application further provides a communication method, and a tone mapper is designed for a high frequency band. The following describes the communication method in detail with reference to FIG. 10.

FIG. 10 is a schematic flowchart of still another communication method according to an embodiment of this application. The method includes the following steps:

S1010: Input reordered high-frequency constellation mapping symbols into a tone inverse-mapper.

In this embodiment, the reordered high-frequency constellation mapping symbol may be a symbol obtained by performing constellation demapping on a QAM symbol or another modulation symbol. A type of the reordered constellation mapping symbol of the input tone inverse-mapper is not limited in this embodiment.

The reordered high-frequency constellation mapping symbol may be understood as a reordered constellation mapping symbol obtained in a process of decoding an OFDM symbol in a high frequency band scenario. In this application, the high frequency band may be understood as a high frequency band defined in a protocol standard (for example, 802.11aj/ay) for the high frequency band, including but not limited to one or more of 45 GHz/60 GHz.

S1020: Perform sequence restoration on the reordered high-frequency constellation mapping symbols.

Sequence restoration is performed, based on the tone inverse-mapper, on the reordered high-frequency constellation mapping symbols.

For example, the reordered high-frequency constellation mapping symbols are used for single-user transmission.

In this embodiment, the tone inverse-mapper may be a tone inverse-mapper independently designed for a high frequency band, or may reuse a tone inverse-mapper defined in an existing protocol (for example, the tone inverse-mapper is formed by concatenating defined tone inverse-mappers). The following describes a possible form of the tone inverse-mapper in this embodiment with reference to Manner 1 and Manner 2.

Manner 3: This manner corresponds to Manner 1. The tone inverse-mapper is designed for the high frequency band. The tone inverse-mapper includes a tone inverse-mapper, a quantity of data tones of the tone inverse-mapper is $N'_{SD}$, a tone mapping distance parameter $D'_{TM}$ of the tone inverse-mapper is a common divisor of $N'_{SD}$, and $N'_{SD}$ is the quantity of data tones.

Manner 3.1: A total quantity of tones is 64, $N'_{SD}$ is less than 52, and a tone mapping distance parameter $D'_{TM}$ of the tone inverse-mapper is 3 or 4. For example, $N'_{SD}$ is 44, and the tone mapping distance parameter $D'_{TM}$ of the first tone inverse-mapper is 4; or $N'_{SD}$ is 42, and the tone mapping distance parameter $D'_{TM}$ of the first tone inverse-mapper is 3; or $N'_{SD}$ is 42, and the tone mapping distance parameter $D'_{TM}$ of the first tone inverse-mapper is 3; or $N'_{SD}$ is 40, and the tone mapping distance parameter $D'_{TM}$ of the first tone inverse-mapper is 4.

In the case shown in Manner 3.1, the communication method shown in FIG. 10 may be used in combination with the communication method shown in FIG. 5 described above, to obtain a proper quantity of pilot tones and a proper tone inverse-mapper that are designed for the high frequency band. This includes but is not limited to the following several possible implementations.

In a possible implementation, the quantity of pilot tones is 12, and the quantity of data tones is 44. Because $44=4\times11$, the tone mapping distance parameter $D'_{TM}$ of the tone inverse-mapper is selected as 4 based on a bandwidth size. A quantity of direct current tones is 1, and an index value is 0. A quantity of guard tones is 7, and index values are [-32:-29, 29:31].

In another possible implementation, the quantity of pilot tones is 14, and the quantity of data tones is 42. Because $42=2\times3\times7$, the tone mapping distance parameter $D'_{TM}$ of the tone inverse-mapper is selected as 3 based on a bandwidth size. A quantity of direct current tones is 1, and an index value is 0. A quantity of guard tones is 7, and index values are [-32:-29, 29:31].

In still another possible implementation, the quantity of pilot tones is 12, and the quantity of data tones is 42. Because $42=2\times3\times7$, the tone mapping distance parameter $D'_{TM}$ of the tone inverse-mapper is selected as 3 based on a bandwidth size. A quantity of direct current tones is 3, and index values are [-1:1]. A quantity of guard tones is 7, and index values are [-32:-29, 29:31].

In still another possible implementation, the quantity of pilot tones is 14, and the quantity of data tones is 40. Because $42=2\times2\times2\times5$, the tone mapping distance parameter $D'_{TM}$ of the tone inverse-mapper is selected as 4 based on a bandwidth size. A quantity of direct current tones is 3, and index values are [-1:1]. A quantity of guard tones is 7, and index values are [-32:-29, 29:31].

Manner 3.2: A total quantity of tones is 128, $N'_{SD}$ is less than 108, and a tone mapping distance parameter $D'_{TM}$ of the tone inverse-mapper is 5 or 7. For example, $N'_{SD}$ is 100, and a tone mapping distance parameter $D'_{TM}$ of the first tone inverse-mapper is 5; or $N'_{SD}$ is 98, and a tone mapping distance parameter $D'_{TM}$ of the first tone inverse-mapper is 7.

In the case shown in Manner 3.2, the communication method shown in FIG. 10 may be used in combination with the communication method shown in FIG. 5 described above, to obtain a proper quantity of pilot tones and a proper tone inverse-mapper that are designed for the high frequency band. This includes but is not limited to the following several possible implementations.

In a possible implementation, the quantity of pilot tones is 14, and the quantity of data tones is 100. Because $100=2\times2\times5\times5$, the tone mapping distance parameter $D'_{TM}$ of the tone inverse-mapper is selected as 5 based on a bandwidth size. A quantity of direct current tones is 3, and index values are [-1:1]. A quantity of guard tones is 11, and index values are [-64:-59, 59:63].

In another possible implementation, the quantity of pilot tones is 16, and the quantity of data tones is 98. Because $98=2\times7\times7$, the tone mapping distance parameter $D'_{TM}$ of the tone inverse-mapper is selected as 7 based on a bandwidth size. A quantity of direct current tones is 3, and index values are [-1:1]. A quantity of guard tones is 11, and index values are [-64:-59, 59:63].

Manner 3.3: A total quantity of tones is 256, $N_{SD}$ is less than 234, and a tone mapping distance parameter $D'_{TM}$ of the tone inverse-mapper is 2 or 8. For example, $N'_{SD}$ is 226, and a tone mapping distance parameter $D'_{TM}$ of the first tone inverse-mapper is 2; or $N'_{SD}$ is 224, and a tone mapping distance parameter $D'_{TM}$ of the first tone inverse-mapper is 8.

In the case shown in Manner 3.3, the communication method shown in FIG. 10 may be used in combination with the communication method shown in FIG. 5 described above, to obtain a proper quantity of pilot tones and a proper tone inverse-mapper that are designed for the high frequency band. This includes but is not limited to the following several possible implementations.

In a possible implementation, the quantity of pilot tones is 16, and the quantity of data tones is 226. Because $226=2\times113$, the tone mapping distance parameter $D'_{TM}$ of the tone inverse-mapper is selected as 2 based on a bandwidth size. A quantity of direct current tones is 3, and index values are [-1:1]. A quantity of guard tones is 11, and index values are [-128:-123, 123:127].

In another possible implementation, the quantity of pilot tones is 18, and the quantity of data tones is 224. Because $224=2\times2\times7\times8$, the tone mapping distance parameter $D'_{TM}$ of the tone inverse-mapper is selected as 8 based on a bandwidth size. A quantity of direct current tones is 3, and index values are [-1:1]. A quantity of guard tones is 11, and index values are [-128:-123, 123:127].

Manner 4: An existing tone inverse-mapper in the Wi-Fi system is reused. The tone inverse-mapper includes at least one tone inverse-mapper, and the at least one tone inverse-mapper is at least one tone inverse-mapper in a preset tone inverse-mapper set. The preset tone inverse-mapper set may be understood as an existing tone inverse-mapper in the Wi-Fi system.

For example, in this embodiment, that the tone inverse-mapper reuses the tone inverse-mapper specified in the existing protocol includes the following several possible implementations.

Manner 4.1: The tone inverse-mapper includes a first tone inverse-mapper, a quantity of data tones of the first tone inverse-mapper is M, a total quantity of data tones is N, N is greater than M, and N and M are positive integers; and sequence restoration is performed, based on the first tone inverse-mapper, on reordered high-frequency constellation mapping symbols carried on the M data tones (for example, first M data tones or any M data tones) of the N data tones, and sequence restoration is not performed on reordered high-frequency constellation mapping symbols carried on remaining N-M data tones (for example, last N-M data tones) of the N data tones.

For example, the total quantity of tones is 64. A value of the total quantity N of data tones includes 46, 44, or 42, a tone mapping distance parameter $D'_{TM}$ of the first tone inverse-mapper is 3, and the quantity of data tones of the first tone inverse-mapper is 36; the first tone inverse-mapper is a tone inverse-mapper, applicable to a first multi-resource unit (for example, a 52+26-tone MRU) using a dual-carrier modulation mode, in the tone inverse-mapper set, the first multi-resource unit includes a first resource unit and a second resource unit, the first resource unit includes 26 tones, and the second resource unit includes 52 tones; and sequence restoration is performed, based on the first tone inverse-mapper, on reordered high-frequency constellation mapping symbols carried on the 36 data tones (for example, the first 36 data tones) of the N data tones, and sequence restoration is not performed on reordered high-frequency constellation mapping symbols carried on remaining N-36 data tones (for example, last N-36 data tones) of the N data tones.

In the case shown in Manner 4.1 in which the total quantity of tones is 64, the communication method shown in FIG. 10 may be used in combination with the communication method shown in FIG. 5 described above, to obtain a proper quantity of pilot tones and a proper tone inverse-mapper that are designed for the high frequency band. This includes but is not limited to the following several possible implementations.

In a possible implementation, the quantity of pilot tones is 10, the total quantity of data tones is 46, a tone mapping distance parameter $D'_{TM}$ of the first tone inverse-mapper is 3, and the quantity of data tones of the first tone inverse-mapper is 36. Sequence restoration is performed, based on the first tone inverse-mapper, on reordered high-frequency constellation mapping symbols carried on the 36 data tones of the data tones, and sequence restoration is not performed on reordered high-frequency constellation mapping symbols carried on remaining 10 data tones of the data tones.

In another possible implementation, the quantity of pilot tones is 12, the total quantity of data tones is 44, a tone mapping distance parameter $D'_{TM}$ of the first tone inverse-mapper is 3, and the quantity of data tones of the first tone inverse-mapper is 36. Sequence restoration is performed, based on the first tone inverse-mapper, on reordered high-frequency constellation mapping symbols carried on the 36 data tones of the data tones, and sequence restoration is not performed on reordered high-frequency constellation mapping symbols carried on remaining eight data tones of the data tones.

In still another possible implementation, the quantity of pilot tones is 14, the total quantity of data tones is 42, a tone mapping distance parameter $D'_{TM}$ of the first tone inverse-mapper is 3, and the quantity of data tones of the first tone inverse-mapper is 36. Sequence restoration is performed, based on the first tone inverse-mapper, on reordered high-frequency constellation mapping symbols carried on the 36 data tones of the data tones, and sequence restoration is not performed on reordered high-frequency constellation mapping symbols carried on remaining 6 data tones of the data tones.

In still another possible implementation, the quantity of pilot tones is 12, the total quantity of data tones is 42, a tone mapping distance parameter $D'_{TM}$ of the first tone inverse-mapper is 3, and the quantity of data tones of the first tone inverse-mapper is 36. Sequence restoration is performed, based on the first tone inverse-mapper, on reordered high-frequency constellation mapping symbols carried on the 36 data tones of the data tones, and sequence restoration is not performed on reordered high-frequency constellation mapping symbols carried on remaining 6 data tones of the data tones.

In still another possible implementation, the quantity of first pilot tones is 14, the total quantity of first data tones is 40, a tone mapping distance parameter $D'_{TM}$ of the first tone inverse-mapper is 3, and the quantity of data tones of the first tone inverse-mapper is 36. Sequence restoration is performed, based on the first tone inverse-mapper, on reordered high-frequency constellation mapping symbols carried on the 36 data tones of the data tones, and sequence restoration is not performed on reordered high-frequency constellation mapping symbols carried on remaining four data tones of the data tones.

It should be understood that the foregoing uses only an example in which the total quantity of tones is 64 for description. When the total quantity of tones is 128, 256, or 512, the first tone inverse-mapper may also reuse a tone inverse-mapper specified in the existing protocol. Sequence restoration may be performed, based on the tone inverse-mapper specified in the existing protocol, on reordered high-frequency constellation mapping symbols carried on some data tones of the data tones, and the reordered high-frequency constellation mapping symbols carried on remaining parts of the data tones do not participate in sequence restoration performed based on the tone inverse-mapper.

Manner 4.2: The tone inverse-mapper includes a first tone inverse-mapper, a quantity of data tones of the first tone inverse-mapper is M, a total quantity of data tones is N, N is greater than M, and N and M are positive integers; and sequence restoration is performed, based on the first tone inverse-mapper, on reordered high-frequency constellation mapping symbols carried on the M data tones (for example, first M data tones) of the N data tones, to obtain reordered N data tones, and sequence restoration is performed, based on the first tone inverse-mapper, on reordered high-frequency constellation mapping symbols carried on M data tones (for example, last M data tones) of the reordered N data tones.

For example, the total quantity of tones is 64. A value of the total quantity N of data tones includes 46, 44, or 42, a tone mapping distance parameter $D'_{TM}$ of the first tone inverse-mapper is 3, and the quantity of data tones of the first tone inverse-mapper is 36; the first tone inverse-mapper is a tone inverse-mapper, applicable to a first multi-resource unit using a dual-carrier modulation mode, in the tone inverse-mapper set, the first multi-resource unit includes a first resource unit and a second resource unit, the first resource unit includes 26 tones, and the second resource unit includes 52 tones; and sequence restoration is performed, based on the first tone inverse-mapper, on reordered high-frequency constellation mapping symbols carried on the 36 data tones of the N data tones, to obtain reordered N data tones, and sequence restoration is performed, based on the first tone inverse-mapper, on reordered high-frequency constellation mapping symbols carried on 36 data tones of the reordered N data tones.

In the case shown in Manner 4.2 in which the total quantity of tones is 64, the communication method shown in FIG. 10 may be used in combination with the communication method shown in FIG. 5 described above, to obtain a proper quantity of pilot tones and a proper tone inverse-mapper that are designed for the high frequency band. This includes but is not limited to the following several possible implementations.

In a possible implementation, the quantity of pilot tones is 10, the total quantity of data tones is 46, a tone mapping distance parameter $D'_{TM}$ of the first tone inverse-mapper is 3, and the quantity of data tones of the first tone inverse-mapper is 36. Sequence restoration is performed, based on the first tone inverse-mapper, on reordered high-frequency constellation mapping symbols carried on the 36 data tones of the data tones, to obtain reordered 46 data tones, and sequence restoration is performed, based on the first tone inverse-mapper, on reordered high-frequency constellation mapping symbols carried on 36 data tones of the reordered 46 data tones.

In another possible implementation, the quantity of pilot tones is 12, the total quantity of data tones is 44, a tone mapping distance parameter $D'_{TM}$ of the first tone inverse-mapper is 3, and the quantity of data tones of the first tone inverse-mapper is 36. Sequence restoration is performed, based on the first tone inverse-mapper, on reordered high-frequency constellation mapping symbols carried on the 36 data tones of the data tones, to obtain reordered 44 data tones, and sequence restoration is performed, based on the first tone inverse-mapper, on reordered high-frequency constellation mapping symbols carried on 36 data tones of the reordered 44 data tones.

In still another possible implementation, the quantity of pilot tones is 14, the total quantity of data tones is 42, a tone mapping distance parameter $D'_{TM}$ of the first tone inverse-mapper is 3, and the quantity of data tones of the first tone inverse-mapper is 36. Sequence restoration is performed, based on the first tone inverse-mapper, on reordered high-frequency constellation mapping symbols carried on the 36 data tones of the data tones, to obtain reordered 42 data tones, and sequence restoration is performed, based on the first tone inverse-mapper, on reordered high-frequency constellation mapping symbols carried on 36 data tones of the reordered 42 data tones.

In still another possible implementation, the quantity of pilot tones is 12, the total quantity of data tones is 42, a tone mapping distance parameter $D'_{TM}$ of the first tone inverse-mapper is 3, and the quantity of data tones of the first tone inverse-mapper is 36. Sequence restoration is performed, based on the first tone inverse-mapper, on reordered high-frequency constellation mapping symbols carried on the 36 data tones of the data tones, to obtain reordered 42 data tones, and sequence restoration is performed, based on the first tone inverse-mapper, on reordered high-frequency constellation mapping symbols carried on 36 data tones of the reordered 42 data tones.

In still another possible implementation, the quantity of pilot tones is 14, the total quantity of data tones is 40, a tone mapping distance parameter $D'_{TM}$ of the first tone inverse-mapper is 3, and the quantity of data tones of the first tone inverse-mapper is 36. Sequence restoration is performed, based on the first tone inverse-mapper, on reordered high-frequency constellation mapping symbols carried on the 36 data tones of the data tones, to obtain reordered 40 data tones, and sequence restoration is performed, based on the first tone inverse-mapper, on reordered high-frequency constellation mapping symbols carried on remaining 36 data tones of the reordered 40 data tones.

It should be understood that the foregoing uses only an example in which the total quantity of tones is 64 for description. When the total quantity of tones is 128, 256, or 512, the first tone inverse-mapper may also reuse a tone inverse-mapper specified in the existing protocol. Sequence restoration may be performed, based on the tone inverse-mapper specified in the existing protocol, on reordered high-frequency constellation mapping symbols carried on some data tones of the data tones. After sequence restoration is performed on the reordered high-frequency constellation mapping symbols carried on the some data tones, reordered high-frequency constellation mapping symbols carried on some data tones of reordered data tones participate again in sequence restoration performed based on the tone inverse-mapper.

Manner 4.3: The tone inverse-mapper includes a plurality of tone inverse-mappers, and a sum of quantities of data tones of the plurality of tone inverse-mappers is equal to the total quantity of data tones; the total quantity of data tones is divided into a plurality of parts, sequence restoration is performed, respectively based on the plurality of tone inverse-mappers, on reordered high-frequency constellation mapping symbols carried on the plurality of parts, and the plurality of parts are in a one-to-one correspondence with the plurality of tone inverse-mappers.

For example, the total quantity of tones is 128, N is 100, the tone inverse-mapper includes a second tone inverse-mapper and a third tone inverse-mapper, a tone mapping distance parameter $D'_{TM}$ of the second tone inverse-mapper is 3, a quantity of data tones of the second tone inverse-mapper is 48, a tone mapping distance parameter $D'_{TM}$ of the third tone inverse-mapper is 4, and a quantity of data tones of the third tone inverse-mapper is 52; the second tone inverse-mapper is a tone inverse-mapper applicable to a second resource unit (for example, a 52-tone RU) in the tone inverse-mapper set, the second resource unit includes 52 tones, the third tone inverse-mapper is a tone inverse-mapper applicable to a 20 M bandwidth signal in the tone inverse-mapper set, and a tone spacing corresponding to the 20 M bandwidth signal is 312.5 kHz; and sequence restoration is performed, based on the second tone inverse-mapper, on reordered high-frequency constellation mapping symbols carried on the 48 data tones (for example, first 48 data tones) of the 100 data tones, and sequence restoration is performed, based on the third tone inverse-mapper, on reordered high-frequency constellation mapping symbols carried on the 52 data tones (for example, last 52 data tones) of the 100 data tones.

In the case shown in Manner 4.3 in which the total quantity of tones is 128, the communication method shown in FIG. 10 may be used in combination with the communication method shown in FIG. 5 described above, to obtain a proper quantity of pilot tones and a proper tone inverse-mapper that are designed for the high frequency band. This includes:

The quantity of pilot tones is 14, the total quantity of data tones is 100, sequence restoration is performed, based on the second tone inverse-mapper, on reordered high-frequency constellation mapping symbols carried on the 48 data tones of the data tones, and sequence restoration is performed, based on the third tone inverse-mapper, on reordered high-frequency constellation mapping symbols carried on the 52 data tones of the 100 data tones.

For example, the total quantity of tones is 256, N is 228, the tone inverse-mapper includes a fourth tone inverse-mapper and a fifth tone inverse-mapper, a tone mapping distance parameter $D'_{TM}$ of the fourth tone inverse-mapper is 6, a quantity of data tones of the fourth tone inverse-mapper is 126, a tone mapping distance parameter $D'_{TM}$ of the fifth tone inverse-mapper is 6, and a quantity of data tones of the fifth tone inverse-mapper is 102; the fourth tone inverse-mapper is a tone inverse-mapper applicable to a second multi-resource unit in the tone inverse-mapper set, the second multi-resource unit includes a third resource unit and a first resource unit, the first resource unit includes 26 tones, the third resource unit includes 106 tones, the fifth tone inverse-mapper is a tone inverse-mapper applicable to a fourth resource unit in the tone inverse-mapper set, and the fourth resource unit includes 102 tones; and sequence restoration is performed, based on the fourth tone inverse-mapper, on reordered high-frequency constellation mapping symbols carried on the 126 data tones of the 228 data tones, and sequence restoration is performed, based on the fifth tone inverse-mapper, on reordered high-frequency constellation mapping symbols carried on the remaining 102 data tones of the 228 data tones.

For example, the total quantity of tones is 256, N is 226, the tone inverse-mapper includes a fourth tone inverse-mapper, a second tone inverse-mapper, and a third tone inverse-mapper, a tone mapping distance parameter $D'_{TM}$ of the fourth tone inverse-mapper is 6, a quantity of data tones of the fourth tone inverse-mapper is 126, a tone mapping distance parameter $D'_{TM}$ of the second tone inverse-mapper is 3, a quantity of data tones of the second tone inverse-mapper is 48, a tone mapping distance parameter $D'_{TM}$ of the third tone inverse-mapper is 4, and a quantity of data tones of the third tone inverse-mapper is 52; and

the fourth tone inverse-mapper is a tone inverse-mapper applicable to a second multi-resource unit in the tone inverse-mapper set, the second multi-resource unit includes a third resource unit and a first resource unit, the first resource unit includes 26 tones, the third resource unit includes 106 tones, the second tone inverse-mapper is a tone inverse-mapper applicable to a second resource unit in the tone inverse-mapper set, the second resource unit includes 52 tones, the third tone inverse-mapper is a tone inverse-mapper applicable to a 20 M bandwidth signal in the tone inverse-mapper set, and a tone spacing corresponding to the 20 M bandwidth signal is 312.5 kHz; and sequence restoration is performed, based on the fourth tone inverse-mapper, on reordered high-frequency constellation mapping symbols carried on the 126 data tones (for example, the first 126 data tones) of the 226 data tones, sequence restoration is performed, based on the second tone inverse-mapper, on reordered high-frequency constellation mapping symbols carried on the 48 data tones (for example, the 127th to 174th data tones) of data tones other than the 126 data tones of the 226 data tones, and sequence restoration is performed, based on the third tone inverse-mapper, on reordered high-frequency constellation mapping symbols carried on the remaining 52 data tones (for example, the 175th to 226th data tones) of the 226 data tones.

In the case shown in Manner 4.3 in which the total quantity of tones is 256, the communication method shown in FIG. 9 may be used in combination with the communication method shown in FIG. 5 described above, to obtain a proper quantity of pilot tones and a proper tone inverse-mapper that are designed for the high frequency band. This includes but is not limited to the following several possible implementations.

In a possible implementation, the quantity of pilot tones is 14, the total quantity of data tones is 228, sequence restoration is performed, based on the fourth tone inverse-mapper, on reordered high-frequency constellation mapping symbols carried on the 126 data tones of the 228 data tones, and sequence restoration is performed, based on the fifth tone inverse-mapper, on reordered high-frequency constellation mapping symbols carried on the remaining 102 data tones of the 228 data tones.

In another possible implementation, the quantity of pilot tones is 16, the total quantity of data tones is 226, sequence restoration is performed, based on the second tone inverse-mapper, on reordered high-frequency constellation mapping symbols carried on the 127th to 174th data tones of the 226 data tones, and sequence restoration is performed, based on the third tone inverse-mapper, on reordered high-frequency constellation mapping symbols carried on the 175th to 226th data tones of the 226 data tones.

For example, the total quantity of tones is 512, N is 474, the tone inverse-mapper includes a sixth tone inverse-mapper, a seventh tone inverse-mapper, and an eighth tone inverse-mapper, a tone mapping distance parameter $D'_{TM}$ of the sixth tone inverse-mapper is 9, a quantity of data tones of the sixth inverse-mapper is 351, a tone mapping distance parameter $D'_{TM}$ of the seventh tone inverse-mapper is 4, a quantity of data tones of the seventh tone inverse-mapper is 72, a tone mapping distance parameter $D'_{TM}$ of the eighth tone inverse-mapper is 3, and a quantity of data tones of the eighth tone inverse-mapper is 51; and

the sixth tone inverse-mapper is a tone inverse-mapper applicable to a third multi-resource unit in the tone inverse-mapper set, the third multi-resource unit includes a fourth resource unit and a fifth resource unit, the fourth resource unit includes 484 tones, the fifth resource unit includes 242 tones, the seventh tone inverse-mapper is a tone inverse-mapper applicable to a first multi-resource unit in the tone inverse-mapper set, the first multi-resource unit includes a first resource unit and a second resource unit, the first resource unit includes 26 tones, the second resource unit includes 52 tones, the eighth tone inverse-mapper is a tone inverse-mapper applicable to a third resource unit in the tone inverse-mapper set, and the third resource unit includes 106 tones; and sequence restoration is performed, based on the sixth tone inverse-mapper, on reordered high-frequency constellation mapping symbols carried on the 351 data tones (for example, first 351 data tones) of the 474 data tones, sequence restoration is performed, based on the seventh tone inverse-mapper, on reordered high-frequency constellation mapping symbols carried on the 72 data tones (for example, the 352nd to 423rd data tones) of data tones other than the 351 data tones of the 474 data tones, and sequence restoration is performed, based on the eighth tone inverse-mapper, on reordered high-frequency constellation mapping symbols carried on the remaining 51 data tones (for example, the 424th to 474th data tones) of the 474 data tones.

In the case shown in Manner 4.3 in which the total quantity of tones is 512, the communication method shown in FIG. 9 may be used in combination with the communication method shown in FIG. 5 described above, to obtain a proper quantity of pilot tones and a proper tone mapper that are designed for the high frequency band. This includes:

The quantity of pilot tones is 24, the total quantity of data tones is 474, sequence restoration is performed, based on the sixth tone inverse-mapper, on reordered high-frequency constellation mapping symbols carried on the 351 data tones (for example, first 351 data tones) of the 474 data tones, sequence restoration is performed, based on the seventh tone inverse-mapper, on reordered high-frequency constellation mapping symbols carried on the 72 data tones (for example, the $352^{nd}$ to $423^{rd}$ data tones) of data tones other than the 351 data tones of the 474 data tones, and sequence restoration is performed, based on the eighth tone inverse-mapper, on reordered high-frequency constellation mapping symbols carried on the remaining 51 data tones (for example, the $424^{th}$ to $474^{th}$ data tones) of the 474 data tones.

In the communication method shown in FIG. 10, for communication transmission in a high frequency band scenario, a proper tone inverse-mapper may be designed, and reordered high-frequency constellation mapping symbols are reordered based on the tone inverse-mapper. In addition, the tone inverse-mapper may be determined by at least one tone inverse-mapper in the tone inverse-mapper set defined in the existing protocol, and no separate design is required. This simplifies implementation.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, methods and operations implemented by a device (for example, an AP and a STA) may also be implemented by a component (for example, a chip or a circuit) that can be used in the device.

It may be further understood that in embodiments of this application, interaction between the AP and the STA is mainly used as an example for description. This application is not limited thereto. The AP may be replaced with a transmit end device, and the transmit end device may be a terminal device. The STA may be replaced with a receive end device, and the receive end device may be a terminal device. Alternatively, the AP may be replaced with an interleaving device, and the interleaving device may be a terminal device; and the STA may be replaced with a deinterleaving device, and the deinterleaving device may be a terminal device. For example, the "AP" may be replaced with a "first terminal device", and the "STA" may be replaced with a "second terminal device".

It may be further understood that some optional features in embodiments of this application may be independent of other features in some scenarios, or may be combined with other features in some scenarios. This is not limited.

The foregoing describes in detail the communication method provided in embodiments of this application with reference to FIG. 5, FIG. 9, and FIG. 10. The foregoing communication method is mainly described from perspectives of interaction between the transmit end device and the receive end device, and from perspectives of the interleaving device and the deinterleaving device. It may be understood that, to implement the foregoing functions, the transmit end device, the receive end device, the interleaving device, and the deinterleaving device include corresponding hardware structures and/or software modules for performing the functions.

A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes in detail a communication apparatus provided in embodiments of this application with reference to FIG. 11 to FIG. 13. It should be understood that descriptions of apparatus embodiments correspond to the descriptions of the method embodiments. Therefore, for content that is not described in detail, refer to the foregoing method embodiments. For brevity, details of a part of content are not described herein again.

In embodiments of this application, the transmit end device, the receive end device, the interleaving device, and the deinterleaving device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 11 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing, or the transceiver module 11 is configured to perform receiving and sending-related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement actions of a device in the foregoing method embodiments.

In a design, the apparatus 10 may correspond to the transmit end device and the receive end device in the foregoing method embodiments, or may be a component (for example, a chip) of the AP.

The apparatus 10 may implement steps or procedures performed by the transmit end device and the receive end device in the foregoing method embodiments. The transceiver module 11 may be configured to perform sending/receiving-related operations of the transmit end device and the receive end device in the foregoing method embodiments. The processing module 12 may be configured to perform processing-related operations of the AP in the foregoing method embodiments.

In a possible implementation, the processing module 12 and the transceiver module 11 are configured to transmit a physical layer protocol data unit (Physical Protocol Data Unit, PPDU) according to a tone plan, where the tone plan is a tone plan of a high frequency band; and the tone plan includes a pilot tone plan, and in the pilot tone plan, a quantity of pilot tones is greater than a preset value.

When the apparatus 10 is configured to perform the method in FIG. 5, the transceiver module 11 may be configured to perform steps of receiving and sending information in the method, for example, step S520, and the processing module 12 may be configured to perform a processing step in the method, for example, step S510.

It should be understood that a specific process in which the units perform the foregoing corresponding steps is described in detail in the foregoing method embodiments, and for brevity, details are not described herein.

In another design, the apparatus 10 may correspond to the interleaving device in the foregoing method embodiments, or may be a component (for example, a chip) of the interleaving device.

The apparatus 10 may implement steps or procedures performed by the interleaving device in the foregoing method embodiments. The transceiver module 11 may be configured to perform sending/receiving-related operations of the interleaving device in the foregoing method embodiments. The processing module 12 may be configured to perform processing-related operations of the STA in the foregoing method embodiments.

In a possible implementation, the processing module 12 is configured to input high-frequency constellation mapping symbols into a tone mapper; and the tone mapper reorders the high-frequency constellation mapping symbols.

When the apparatus 10 is configured to perform the method in FIG. 9, the transceiver module 11 may be configured to perform steps of receiving and sending information in the method; and the processing module 12 may be configured to perform a processing step in the method, for example, steps S910 and S920.

It should be understood that a specific process in which the units perform the foregoing corresponding steps is described in detail in the foregoing method embodiments, and for brevity, details are not described herein.

In still another design, the apparatus 10 may correspond to the deinterleaving device in the foregoing method embodiments, or a component (for example, a chip) of the deinterleaving device.

The apparatus 10 may implement steps or procedures performed by the deinterleaving device in the foregoing method embodiments. The transceiver module 11 may be configured to perform sending/receiving-related operations of the deinterleaving device in the foregoing method embodiments, and the processing module 12 may be configured to perform processing-related operations of the STA in the foregoing method embodiments.

In a possible implementation, the processing module 12 is configured to input reordered high-frequency constellation mapping symbols into a tone inverse-mapper; and the tone inverse-mapper performs sequence restoration on the reordered high-frequency constellation mapping symbols.

When the apparatus 10 is configured to perform the method in FIG. 10, the transceiver module 11 may be configured to perform the steps of sending and receiving information in the method, and the processing module 12 may be configured to perform processing steps in the method, for example, steps S1010 and S1020.

It should be understood that a specific process in which the units perform the foregoing corresponding steps is described in detail in the foregoing method embodiments, and for brevity, details are not described herein.

It should be further understood that the apparatus 10 herein is embodied in a form of a functional module. The term "module" herein may be an application-specific integrated circuit (application-specific integrated circuit, ASIC), an electronic circuit, a processor (such as a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by devices (such as an AP and a STA) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to separately perform a receiving and sending operation and a related processing operation in each method embodiment.

In addition, the transceiver module 11 may alternatively be a transceiver circuit (for example, may include a receiving circuit and a sending circuit), and the processing module may be a processing circuit.

FIG. 12 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 12, the apparatus 20 further includes the memory 22, and the memory 22 is configured to store the computer program or instructions and/or data. The memory 22 may be integrated with the processor 21, or may be disposed separately. Optionally, there are one or more memories 22.

Optionally, as shown in FIG. 12, the apparatus 20 further includes a transceiver 23. The transceiver 23 is configured to: receive and/or send a signal. For example, the processor 21 is configured to control the transceiver 23 to receive and/or send a signal.

In a solution, the apparatus 20 is configured to implement operations performed by the transmit end device, the receive end device, the interleaving device, and the deinterleaving device in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes the following a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described in this specification is intended to include, but is not limited to, these memories and any other memory of a suitable type.

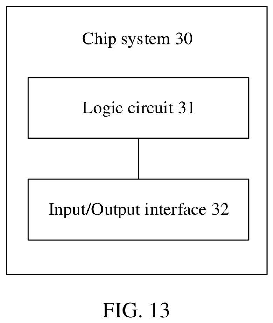

FIG. 13 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the transmit end device, the receive end device, the interleaving device, and the deinterleaving device in the foregoing method embodiments.

For example, the logic circuit 31 is configured to implement processing-related operations performed by the transmit end device, the receive end device, the interleaving device, and the deinterleaving device in the foregoing method embodiments. The input/output interface 32 is configured to implement sending and/or receiving-related operations performed by the terminal device in the foregoing method embodiments.

An embodiment of this application further provides a computer-readable storage medium. The computer-readable storage medium stores computer instructions for implementing the methods performed by the transmit end device, the receive end device, the interleaving device, and the deinterleaving device in the foregoing method embodiments.

For example, when the computer program is executed by a computer, the computer is enabled to implement the methods performed by the transmit end device, the receive end device, the interleaving device, and the deinterleaving device in the foregoing method embodiments.

An embodiment of this application further provides a computer program product, including instructions. When the instructions are executed by a computer, the methods performed by the transmit end device, the receive end device, the interleaving device, and the deinterleaving device in the foregoing method embodiments are implemented.

An embodiment of this application further provides a communication system, including the foregoing transmit end device and receive end device.

An embodiment of this application further provides a communication system, including the foregoing interleaving device and deinterleaving device.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

**1.** A communication method, comprising:

inputting high-frequency constellation mapping symbols into a tone mapper; and
reordering, by the tone mapper, the high-frequency constellation mapping symbols.

2. The method according to claim 1, wherein the high-frequency constellation mapping symbols are used for single-user transmission.

3. The method according to claim 1 or 2, wherein a quantity of data tones of the tone mapper is $N_{SD}$; and

   if a total quantity of tones is 64, $N_{SD}$ is less than 52, and a tone mapping distance parameter $D_{TM}$ of the tone mapper is 3 or 4; or
   if a total quantity of tones is 128, $N_{SD}$ is less than 108, and a tone mapping distance parameter $D_{TM}$ of the tone mapper is 5 or 7; or
   if a total quantity of tones is 256, $N_{SD}$ is less than 234, and a tone mapping distance parameter $D_{TM}$ of the tone mapper is 2 or 8.

4. The method according to claim 3, wherein if the total quantity of tones is 64,

   $N_{SD}$ is 44, and the tone mapping distance parameter $D_{TM}$ of the tone mapper is 4; or
   $N_{SD}$ is 42, and the tone mapping distance parameter $D_{TM}$ of the tone mapper is 3; or
   $N_{SD}$ is 42, and the tone mapping distance parameter $D_{TM}$ of the tone mapper is 3; or
   $N_{SD}$ is 40, and the tone mapping distance parameter $D_{TM}$ of the tone mapper is 4.

5. The method according to claim 3, wherein if the total quantity of tones is 128,

   $N_{SD}$ is 100, and the tone mapping distance parameter $D_{TM}$ of the tone mapper is 5; or
   $N_{SD}$ is 98, and the tone mapping distance parameter $D_{TM}$ of the tone mapper is 7.

6. The method according to claim 3, wherein if the total quantity of tones is 256,

   $N_{SD}$ is 226, and the tone mapping distance parameter $D_{TM}$ of the tone mapper is 2; or
   $N_{SD}$ is 224, and the tone mapping distance parameter $D_{TM}$ of the tone mapper is 8.

7. The method according to claim 1 or 2, wherein the tone mapper comprises at least one tone mapper, and the at least one tone mapper is at least one tone mapper in a preset tone mapper set.

8. The method according to claim 7, wherein the tone mapper comprises a first tone mapper, a quantity of data tones of the first tone mapper is M, a total quantity of data tones is N, N is greater than M, and N and M are positive integers; and high-frequency constellation mapping symbols carried on the M data tones of the N data tones are reordered based on the first tone mapper, and high-frequency constellation mapping symbols carried on remaining N-M data tones of the N data tones are not reordered.

9. The method according to claim 8, wherein if a total quantity of tones is 64, a value of the total quantity N of data tones comprises 46, 44, or 42;

   a tone mapping distance parameter $D_{TM}$ of the first tone mapper is 3, and the quantity of data tones of the first tone mapper is 36;
   the first tone mapper is a tone mapper, applicable to a first multi-resource unit using a dual-carrier modulation mode, in the tone mapper set, the first multi-resource unit comprises a first resource unit and a second resource unit, the first resource unit comprises 26 tones, and the second resource unit comprises 52 tones; and
   high-frequency constellation mapping symbols carried on the 36 data tones of the N data tones are reordered based on the first tone mapper, and high-frequency constellation mapping symbols carried on remaining N-36 data tones of the N data tones are not reordered.

10. The method according to claim 7, wherein the tone mapper comprises a first tone mapper, a quantity of data tones of the first tone mapper is M, a total quantity of data tones is N, N is greater than M, and N and M are positive integers; and high-frequency constellation mapping symbols carried on the M data tones of the N data tones are reordered based on the first tone mapper, to obtain reordered N data tones, and high-frequency constellation mapping symbols carried on M data tones of the reordered N data tones are reordered based on the first tone mapper.

11. The method according to claim 10, wherein if a total quantity of tones is 64, a value of N comprises 46, 44, or 42;

a tone mapping distance parameter $D_{TM}$ of the first tone mapper is 3, and the quantity of data tones of the first tone mapper is 36;

the first tone mapper is a tone mapper, applicable to a first multi-resource unit using a dual-carrier modulation mode, in the tone mapper set, the first multi-resource unit comprises a first resource unit and a second resource unit, the first resource unit comprises 26 tones, and the second resource unit comprises 52 tones; and high-frequency constellation mapping symbols carried on the 36 data tones of the N data tones are reordered based on the first tone mapper, to obtain reordered N data tones, and high-frequency constellation mapping symbols carried on 36 data tones of the reordered N data tones are reordered based on the first tone mapper.

12. The method according to claim 7, wherein the tone mapper comprises a plurality of tone mappers, and a sum of quantities of data tones of the plurality of tone mappers is equal to a total quantity of data tones; and the total quantity of data tones is divided into a plurality of parts, high-frequency constellation mapping symbols carried on the plurality of parts are separately reordered based on the plurality of tone mappers, and the plurality of parts are in a one-to-one correspondence with the plurality of tone mappers.

13. The method according to claim 12, wherein if a total quantity of tones is 128, N is 100, the tone mapper comprises a second tone mapper and a third tone mapper, a tone mapping distance parameter $D_{TM}$ of the second tone mapper is 3, a quantity of data tones of the second tone mapper is 48, a tone mapping distance parameter $D_{TM}$ of the third tone mapper is 4, and a quantity of data tones of the third tone mapper is 52;

the second tone mapper is a tone mapper applicable to a second resource unit in the tone mapper set, the second resource unit comprises 52 tones, the third tone mapper is a tone mapper applicable to a 20 M bandwidth signal in the tone mapper set, and a tone spacing corresponding to the 20 M bandwidth signal is 312.5 kHz; and high-frequency constellation mapping symbols carried on the 48 data tones of the 100 data tones are reordered based on the second tone mapper, and high-frequency constellation mapping symbols carried on the remaining 52 data tones of the 100 data tones are reordered based on the third tone mapper.

14. The method according to claim 12, wherein if a total quantity of tones is 256, N is 228, the tone mapper comprises a fourth tone mapper and a fifth tone mapper, a tone mapping distance parameter $D_{TM}$ of the fourth tone mapper is 6, a quantity of data tones of the fourth tone mapper is 126, a tone mapping distance parameter $D_{TM}$ of the fifth tone mapper is 6, and a quantity of data tones of the fifth tone mapper is 102;

the fourth tone mapper is a tone mapper applicable to a second multi-resource unit in the tone mapper set, the second multi-resource unit comprises a third resource unit and a first resource unit, the first resource unit comprises 26 tones, the third resource unit comprises 106 tones, and the fifth tone mapper is a tone mapper applicable to the third resource unit in the tone mapper set; and high-frequency constellation mapping symbols carried on the 126 data tones of the 228 data tones are reordered based on the fourth tone mapper, and high-frequency constellation mapping symbols carried on the remaining 102 data tones of the 228 data tones are reordered based on the fifth tone mapper.

15. The method according to claim 13, wherein if a total quantity of tones is 256, N is 226, the tone mapper comprises a fourth tone mapper, a second tone mapper, and a third tone mapper, a tone mapping distance parameter $D_{TM}$ of the fourth tone mapper is 6, a quantity of data tones of the fourth tone mapper is 126, a tone mapping distance parameter $D_{TM}$ of the second tone mapper is 3, a quantity of data tones of the second tone mapper is 48, a tone mapping distance parameter $D_{TM}$ of the third tone mapper is 4, and a quantity of data tones of the third tone mapper is 52;

the fourth tone mapper is a tone mapper applicable to a second multi-resource unit in the tone mapper set, the second multi-resource unit comprises a third resource unit and a first resource unit, the first resource unit comprises 26 tones, the third resource unit comprises 106 tones, the second tone mapper is a tone mapper applicable to the second resource unit in the tone mapper set, the second resource unit comprises 52 tones, the third tone mapper is a tone mapper applicable to a 20 M bandwidth signal in the tone mapper set, and a tone spacing corresponding to the 20 M bandwidth signal is 312.5 kHz; and high-frequency constellation mapping symbols carried on the 126 data tones of the 226 data tones are reordered based on the fourth tone mapper, high-frequency constellation mapping symbols carried on the 48 data tones of data tones other than the 126 data tones of the 226 data tones are reordered based on the second tone mapper, and high-frequency constellation mapping symbols carried on the remaining 52 data tones of the 226 data tones are reordered based on the third tone mapper.

**16.** The method according to claim 13, wherein if a total quantity of tones is 512, N is 474;

the tone mapper comprises a sixth tone mapper, a seventh tone mapper, and an eighth tone mapper, a tone mapping distance parameter $D_{TM}$ of the sixth tone mapper is 9, a quantity of data tones of the sixth tone mapper is 351, a tone mapping distance parameter $D_{TM}$ of the seventh tone mapper is 4, a quantity of data tones of the seventh tone mapper is 72, a tone mapping distance parameter $D_{TM}$ of the eighth tone mapper is 3, and a quantity of data tones of the eighth tone mapper is 51;

the sixth tone mapper is a tone mapper, applicable to a third multi-resource unit using a dual-carrier modulation mode, in the tone mapper set, the third multi-resource unit comprises a fourth resource unit and a fifth resource unit, the fourth resource unit comprises 484 tones, the fifth resource unit comprises 242 tones, the seventh tone mapper is a tone mapper applicable to a first multi-resource unit in the tone mapper set, the first multi-resource unit comprises a first resource unit and a second resource unit, the first resource unit comprises 26 tones, the second resource unit comprises 52 tones, the eighth tone mapper is a tone mapper applicable to a third resource unit in the tone mapper set, and the third resource unit comprises 106 tones; and

high-frequency constellation mapping symbols carried on the 351 data tones of the 474 data tones are reordered based on the sixth tone mapper, high-frequency constellation mapping symbols carried on the 72 data tones of data tones other than the 351 data tones of the 474 data tones are reordered based on the seventh tone mapper, and high-frequency constellation mapping symbols carried on the remaining 51 data tones of the 474 data tones are reordered based on the eighth tone mapper.

**17.** A communication method, comprising:

inputting reordered high-frequency constellation mapping symbols into a tone inverse-mapper; and
performing, by the tone inverse-mapper, sequence restoration on the reordered high-frequency constellation mapping symbols.

**18.** The method according to claim 17, wherein the reordered high-frequency constellation mapping symbols are used for single-user transmission.

**19.** The method according to claim 17 or 18, wherein the tone inverse-mapper comprises a first tone inverse-mapper, and a quantity of data tones of the first tone inverse-mapper is $N'_{SD}$; and

if a total quantity of tones is 64, $N'_{SD}$ is less than 52, and a tone mapping distance parameter $D'_{TM}$ of the first tone inverse-mapper is 3 or 4; or
if a total quantity of tones is 128, $N'_{SD}$ is less than 108, and a tone mapping distance parameter $D'_{TM}$ of the first tone inverse-mapper is 5 or 7; or
if a total quantity of tones is 256, $N'_{SD}$ is less than 234, and a tone mapping distance parameter $D'_{TM}$ of the first tone inverse-mapper is 2 or 8.

**20.** The method according to claim 19, wherein if the total quantity of tones is 64,

$N'_{SD}$ is 44, and the tone mapping distance parameter $D'_{TM}$ of the first tone inverse-mapper is 4; or
$N'_{SD}$ is 42, and the tone mapping distance parameter $D'_{TM}$ of the first tone inverse-mapper is 3; or
$N'_{SD}$ is 42, and the tone mapping distance parameter $D'_{TM}$ of the first tone inverse-mapper is 3; or
$N'_{SD}$ is 40, and the tone mapping distance parameter $D'_{TM}$ of the first tone inverse-mapper is 4.

**21.** The method according to claim 19, wherein if the total quantity of tones is 128,

$N'_{SD}$ is 100, and the tone mapping distance parameter $D'_{TM}$ of the first tone inverse-mapper is 5; or
$N'_{SD}$ is 98, and the tone mapping distance parameter $D'_{TM}$ of the first tone inverse-mapper is 7.

**22.** The method according to claim 19, wherein if the total quantity of tones is 256,

$N'_{SD}$ is 226, and the tone mapping distance parameter $D'_{TM}$ of the first tone inverse-mapper is 2; or
$N'_{SD}$ is 224, and the tone mapping distance parameter $D'_{TM}$ of the first tone inverse-mapper is 8.

**23.** The method according to claim 17 or 18, wherein the tone inverse-mapper comprises at least one tone inverse-mapper, and the at least one tone inverse-mapper is at least one tone inverse-mapper in a preset tone inverse-mapper set.

24. The method according to claim 23, wherein the tone inverse-mapper comprises a first tone inverse-mapper, a quantity of data tones of the first tone inverse-mapper is M, a total quantity of data tones is N, N is greater than M, and N and M are positive integers; and

sequence restoration is performed, based on the first tone inverse-mapper, on reordered high-frequency constellation mapping symbols carried on the M data tones of the N data tones, and sequence restoration is not performed on reordered high-frequency constellation mapping symbols carried on remaining N-M data tones of the N data tones.

25. The method according to claim 24, wherein if a total quantity of tones is 64, a value of the total quantity N of data tones comprises 46, 44, or 42;

a tone mapping distance parameter $D'_{TM}$ of the first tone inverse-mapper is 3, and the quantity of data tones of the first tone inverse-mapper is 36;

the first tone inverse-mapper is a tone inverse-mapper, applicable to a first multi-resource unit using a dual-carrier modulation mode, in the tone inverse-mapper set, the first multi-resource unit comprises a first resource unit and a second resource unit, the first resource unit comprises 26 tones, and the second resource unit comprises 52 tones; and

sequence restoration is performed, based on the first tone inverse-mapper, on reordered high-frequency constellation mapping symbols carried on the 36 data tones of the N data tones, and sequence restoration is not performed on reordered high-frequency constellation mapping symbols carried on remaining N-36 data tones of the N data tones.

26. The method according to claim 23, wherein the tone inverse-mapper comprises a first tone inverse-mapper, a quantity of data tones of the first tone inverse-mapper is M, a total quantity of data tones is N, N is greater than M, and N and M are positive integers; and

sequence restoration is performed, based on the first tone inverse-mapper, on reordered high-frequency constellation mapping symbols carried on the M data tones of the N data tones, to obtain reordered N data tones, and sequence restoration is performed, based on the first tone inverse-mapper, on reordered high-frequency constellation mapping symbols carried on M data tones of the reordered N data tones.

27. The method according to claim 26, wherein if a total quantity of tones is 64, a value of N comprises 46, 44, or 42;

a tone mapping distance parameter $D'_{TM}$ of the first tone inverse-mapper is 3, and the quantity of data tones of the first tone inverse-mapper is 36;

the first tone inverse-mapper is a tone inverse-mapper, applicable to a first multi-resource unit using a dual-carrier modulation mode, in the tone inverse-mapper set, the first multi-resource unit comprises a first resource unit and a second resource unit, the first resource unit comprises 26 tones, and the second resource unit comprises 52 tones; and

sequence restoration is performed, based on the first tone inverse-mapper, on reordered high-frequency constellation mapping symbols carried on the 36 data tones of the N data tones, to obtain reordered N data tones, and sequence restoration is performed, based on the first tone inverse-mapper, on reordered high-frequency constellation mapping symbols carried on 36 data tones of the reordered N data tones.

28. The method according to claim 26, wherein the tone inverse-mapper comprises a plurality of tone inverse-mappers, and a sum of quantities of data tones of the plurality of tone inverse-mappers is equal to the total quantity of data tones; and

the total quantity of data tones is divided into a plurality of parts, sequence restoration is performed, respectively based on the plurality of tone inverse-mappers, on reordered high-frequency constellation mapping symbols carried on the plurality of parts, and the plurality of parts are in a one-to-one correspondence with the plurality of tone inverse-mappers.

29. The method according to claim 28, wherein if a total quantity of tones is 128, N is 100, the tone inverse-mapper comprises a second tone inverse-mapper and a third tone inverse-mapper, a tone mapping distance parameter $D'_{TM}$ of the second tone inverse-mapper is 3, a quantity of data tones of the second tone inverse-mapper is 48, a tone mapping distance parameter $D'_{TM}$ of the third tone inverse-mapper is 4, and a quantity of data tones of the third tone inverse-mapper is 52;

the second tone inverse-mapper is a tone inverse-mapper applicable to a second resource unit in the tone inverse-mapper set, the second resource unit comprises 52 tones, the third tone inverse-mapper is a tone inverse-mapper applicable to a 20 M bandwidth signal in the tone inverse-mapper set, and a tone spacing corresponding to the 20 M bandwidth signal is 312.5 kHz; and

sequence restoration is performed, based on the second tone inverse-mapper, on reordered high-frequency constellation mapping symbols carried on the 48 data tones of the 100 data tones, and sequence restoration is performed, based on the third tone inverse-mapper, on reordered high-frequency constellation mapping symbols carried on the remaining 52 data tones of the 100 data tones.

30. The method according to claim 28, wherein if a total quantity of tones is 256, N is 228, the tone inverse-mapper comprises a fourth tone inverse-mapper and a fifth tone inverse-mapper, a tone mapping distance parameter $D'_{TM}$ of the fourth tone inverse-mapper is 6, a quantity of data tones of the fourth tone inverse-mapper is 126, a tone mapping distance parameter $D'_{TM}$ of the fifth tone inverse-mapper is 6, and a quantity of data tones of the fifth tone inverse-mapper is 102;

the fourth tone inverse-mapper is a tone inverse-mapper applicable to a second multi-resource unit in the tone inverse-mapper set, the second multi-resource unit comprises a third resource unit and a first resource unit, the first resource unit comprises 26 tones, the third resource unit comprises 106 tones, and the fifth tone inverse-mapper is a tone inverse-mapper applicable to the third resource unit in the tone inverse-mapper set; and

sequence restoration is performed, based on the fourth tone inverse-mapper, on reordered high-frequency constellation mapping symbols carried on the 126 data tones of the 228 data tones, and sequence restoration is performed, based on the fifth tone inverse-mapper, on reordered high-frequency constellation mapping symbols carried on the remaining 102 data tones of the 228 data tones.

31. The method according to claim 28, wherein if a total quantity of tones is 256, N is 226, the tone inverse-mapper comprises a fourth tone inverse-mapper, a second tone inverse-mapper, and a third tone inverse-mapper, a tone mapping distance parameter $D'_{TM}$ of the fourth tone inverse-mapper is 6, a quantity of data tones of the fourth tone inverse-mapper is 126, a tone mapping distance parameter $D'_{TM}$ of the second tone inverse-mapper is 3, a quantity of data tones of the second tone inverse-mapper is 48, a tone mapping distance parameter $D'_{TM}$ of the third tone inverse-mapper is 4, and a quantity of data tones of the third tone inverse-mapper is 52;

the fourth tone inverse-mapper is a tone inverse-mapper applicable to a second multi-resource unit in the tone inverse-mapper set, the second multi-resource unit comprises a third resource unit and a first resource unit, the first resource unit comprises 26 tones, the third resource unit comprises 106 tones, the second tone inverse-mapper is a tone inverse-mapper applicable to a second resource unit in the tone inverse-mapper set, the second resource unit comprises 52 tones, the third tone inverse-mapper is a tone inverse-mapper applicable to a 20 M bandwidth signal in the tone inverse-mapper set, and a tone spacing corresponding to the 20 M bandwidth signal is 312.5 kHz; and

sequence restoration is performed, based on the fourth tone inverse-mapper, on reordered high-frequency constellation mapping symbols carried on the 126 data tones of the 226 data tones, sequence restoration is performed, based on the second tone inverse-mapper, on reordered high-frequency constellation mapping symbols carried on the 48 data tones of data tones other than the 126 data tones of the 226 data tones, and sequence restoration is performed, based on the third tone inverse-mapper, on reordered high-frequency constellation mapping symbols carried on the remaining 52 data tones of the 226 data tones.

32. The method according to claim 28, wherein if a total quantity of tones is 512, N is 474;

the tone inverse-mapper comprises a sixth tone inverse-mapper, a seventh tone inverse-mapper, and an eighth tone inverse-mapper, a tone mapping distance parameter $D'_{TM}$ of the sixth tone inverse-mapper is 9, a quantity of data tones of the sixth inverse-mapper is 351, a tone mapping distance parameter $D_{TM}$ of the seventh tone inverse-mapper is 4, a quantity of data tones of the seventh tone inverse-mapper is 72, a tone mapping distance parameter $D'_{TM}$ of the eighth tone inverse-mapper is 3, and a quantity of data tones of the eighth tone inverse-mapper is 51;

the sixth tone inverse-mapper is a tone inverse-mapper applicable to a third multi-resource unit in the tone inverse-mapper set, the third multi-resource unit comprises a fourth resource unit and a fifth resource unit, the fourth resource unit comprises 484 tones, the fifth resource unit comprises 242 tones, the seventh tone inverse-mapper is a tone inverse-mapper applicable to a first multi-resource unit in the tone inverse-mapper set, the first multi-resource unit comprises a first resource unit and a second resource unit, the first resource unit comprises 26 tones, the second resource unit comprises 52 tones, the eighth tone inverse-mapper is a tone inverse-mapper applicable to a third resource unit in the tone inverse-mapper set, and the third resource unit comprises 106 tones; and

sequence restoration is performed, based on the sixth tone inverse-mapper, on reordered high-frequency constellation mapping symbols carried on the 351 data tones of the 474 data tones, sequence restoration is performed, based on the seventh tone inverse-mapper, on reordered high-frequency constellation mapping symbols carried on the 72 data tones of data tones other than the 351 data tones of the 474 data tones, and sequence restoration is performed, based on the eighth tone inverse-mapper, on reordered high-frequency constellation mapping symbols carried on the remaining 51 data tones of the 474 data tones.

33. A communication apparatus, comprising a unit or a module configured to perform the method according to any one of claims 1 to 16.

34. A communication apparatus, comprising a unit or a module configured to perform the method according to any one of claims 17 to 32.

35. A communication apparatus, comprising a communication interface and a processor, wherein the communication interface is configured to send and receive data or signaling, and the processor is configured to execute a computer program or instructions, to enable the communication apparatus to perform the method according to any one of claims 1 to 16.

36. A communication apparatus, comprising a communication interface and a processor, wherein the communication interface is configured to send and receive data or signaling, and the processor is configured to execute a computer program or instructions, to enable the communication apparatus to perform the method according to any one of claims 17 to 32.

37. A computer-readable storage medium, comprising a computer program or instructions, wherein when the computer program or the instructions are run on a computer, the method according to any one of claims 1 to 32 is performed.

FIG. 1

| L-STF | L-LTF | L-SIG | HT-SIG | HT-STF | HT-LTF | ... | HT-LTF | DATA |
|---|---|---|---|---|---|---|---|---|

Pre-HT modulation field      HT modulation field

(a)

| L-STF | L-LTF | L-SIG | VHT-SIG-A | VHT-STF | VHT-LTF | VHT-SIGB | DATA |
|---|---|---|---|---|---|---|---|

Pre-VHT modulation field      VHT modulation field

(b)

| L-STF | L-LTF | L-SIG | RL-SIG | HE-SIG-A | HE-SIG-B | HE-STF | HE-LTF | ... | HE-LTF | DATA | PE |
|---|---|---|---|---|---|---|---|---|---|---|---|

Pre-HE modulation field      HE modulation field

(c)

| EHT-SIG common field | EHT-SIG user-specific field |
|---|---|

| L-STF | L-LTF | L-SIG | RL-SIG | U-SIG SYM 1 | U-SIG SYM 2 | EHT-SIG | EHT-STF | EHT-LTF | Data |
|---|---|---|---|---|---|---|---|---|---|

| Version independent field | Version dependent field | Cyclic redundancy code | Tail |
|---|---|---|---|

(d)

FIG. 2

FIG. 3(a)

```
┌─────────────────────────┐          ┌─────────────────────────┐
│ Descrambling            │          │ Descrambling            │
│ (descrambler)           │          │ (descrambler)           │
└─────────────────────────┘          └─────────────────────────┘
            ▲                                    ▲
┌─────────────────────────┐          ┌─────────────────────────┐
│ LDPC decoding (decoder) │          │ LDPC decoding (decoder) │
└─────────────────────────┘          └─────────────────────────┘
            ▲                                    ▲
┌─────────────────────────┐          ┌─────────────────────────┐
│ Constellation demapping │   ...    │ Constellation demapping │
│ (constellation demapper)│          │ (Constellation demapper)│
└─────────────────────────┘          └─────────────────────────┘
            ▲                                    ▲
┌─────────────────────────┐          ┌─────────────────────────┐
│ Deinterleaving (demapper)│   ...   │ Deinterleaving (demapper)│
└─────────────────────────┘          └─────────────────────────┘
            ▲                                    ▲
     ┌──────────────────────────────────────────────────┐
     │ Perform processing, channel estimation, and channel│
     │         equalization on a pilot signal             │
     └──────────────────────────────────────────────────┘
            ▲                                    ▲
┌─────────────────────────┐          ┌─────────────────────────┐
│ Discrete Fourier        │   ...    │ Discrete Fourier        │
│ transform (DFT)         │          │ transform (DFT)         │
└─────────────────────────┘          └─────────────────────────┘
            ▲                                    ▲
┌─────────────────────────┐          ┌─────────────────────────┐
│ Cyclic prefix removal   │   ...    │ Cyclic prefix removal   │
└─────────────────────────┘          └─────────────────────────┘
            ▲                                    ▲
┌─────────────────────────┐          ┌─────────────────────────┐
│ Analog and radio        │   ...    │ Analog and radio        │
│ frequency               │          │ frequency               │
│ (Analog and RF)         │          │ (Analog and RF)         │
└─────────────────────────┘          └─────────────────────────┘
            ▲                                    ▲
```

FIG. 3(b)

FIG. 4(a)

FIG. 4(b)

FIG. 5

FIG. 6

FIG. 7

FIG. 8

FIG. 9

S1010

Input reordered high-frequency constellation mapping symbols into a tone inverse-mapper

S1020

Perform sequence restoration on the reordered high-frequency constellation mapping symbols

FIG. 10

10

Transceiver module 11

Processing module 12

Storage module 13

FIG. 11

20

Processor 21

Transceiver 23

Memory 22

FIG. 12

Chip system 30

Logic circuit 31

Input/Output interface 32

FIG. 13

## INTERNATIONAL SEARCH REPORT

| International application No. |
| --- |
| **PCT/CN2024/096018** |

**A.     CLASSIFICATION OF SUBJECT MATTER**

H04L27/26(2006.01)i;   H04W72/0453(2023.01)i;   H04W72/50(2023.01)i

According to International Patent Classification (IPC) or to both national classification and IPC

**B.     FIELDS SEARCHED**

Minimum documentation searched (classification system followed by classification symbols)

IPC:   H04L H04W

Documentation searched other than minimum documentation to the extent that such documents are included in the fields searched

Electronic data base consulted during the international search (name of data base and, where practicable, search terms used)

3GPP, CJFD, CNTXT, ENTXT, ENTXTC, ETSI, IETF: 导频, 子载波, 符号, 高频, 公约数, 距离参数, 排序, 重, 音调, 映射, PPDU, huawei, interleaver, LDPC, mapper, tone, 802.11ay, common divisor, 802.11aj, distance parameter?, map+

**C.     DOCUMENTS CONSIDERED TO BE RELEVANT**

| Category* | Citation of document, with indication, where appropriate, of the relevant passages | Relevant to claim No. |
| --- | --- | --- |
| X | CN 113098655 A (HUAWEI TECHNOLOGIES CO., LTD.) 09 July 2021 (2021-07-09) description, paragraphs 2-4, 142-150, 168-174, 241-258, and 286-287 | 1-7, 17-23, 33-37 |
| X | CN 112272929 A (QUALCOMM INC.) 26 January 2021 (2021-01-26) description, paragraph 184 | 1-7, 17-23, 33-37 |
| X | TW 201722107 A (INTERDIGITAL PATENT HOLDINGS, INC.) 16 June 2017 (2017-06-16) description, pages 12-13 | 1, 2, 17, 18, 33-37 |
| A | CN 111373671 A (QUALCOMM INC.) 03 July 2020 (2020-07-03) entire document | 1-37 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 July 2024** | **08 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/096018**

| Patent document cited in search report | | | Publication date (day/month/year) | Patent family member(s) | | | Publication date (day/month/year) |
|---|---|---|---|---|---|---|---|
| CN | 113098655 | A | 09 July 2021 | WO | 2021139558 | A1 | 15 July 2021 |
| CN | 112272929 | A | 26 January 2021 | US | 2019281614 | A1 | 12 September 2019 |
| | | | | US | 10856311 | B2 | 01 December 2020 |
| | | | | WO | 2019173240 | A1 | 12 September 2019 |
| TW | 201722107 | A | 16 June 2017 | EP | 3742638 | A1 | 25 November 2020 |
| | | | | WO | 2017044591 | A1 | 16 March 2017 |
| | | | | US | 2018248591 | A1 | 30 August 2018 |
| | | | | US | 10536196 | B2 | 14 January 2020 |
| | | | | EP | 3348011 | A1 | 18 July 2018 |
| | | | | EP | 3348011 | B1 | 08 April 2020 |
| CN | 111373671 | A | 03 July 2020 | US | 2019141717 | A1 | 09 May 2019 |
| | | | | EP | 3707835 | A1 | 16 September 2020 |
| | | | | WO | 2019089207 | A1 | 09 May 2019 |
| | | | | TW | 201924368 | A | 16 June 2019 |

Form PCT/ISA/210 (patent family annex) (July 2022)

**EP 4 716 167 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310696390X